(19) Europäisches Patentamt
European Patent Office
Office européen des brevets

(11) **EP 4 289 633 B1**

(12) **EUROPEAN PATENT SPECIFICATION**

(45) Date of publication and mention
of the grant of the patent:
**03.12.2025 Bulletin 2025/49**

(51) International Patent Classification (IPC):
**B60C 1/00** *(2006.01)*      **B60C 11/00** *(2006.01)*
**B60C 11/03** *(2006.01)*

(21) Application number: **23173040.9**

(52) Cooperative Patent Classification (CPC):
**B60C 1/0016; B60C 11/033;** B60C 2011/0016;
B60C 2200/00

(22) Date of filing: **12.05.2023**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.06.2022 JP 2022091786**

(43) Date of publication of application:
**13.12.2023 Bulletin 2023/50**

(73) Proprietor: **Sumitomo Rubber Industries, Ltd.
Kobe-shi, Hyogo 651-0072 (JP)**

(72) Inventor: **YAMAMOTO, Keisuke
Kobe-shi, 651-0072 (JP)**

(74) Representative: **TBK
Bavariaring 4-6
80336 München (DE)**

(56) References cited:
**EP-A1- 1 314 581      EP-A1- 2 730 434
EP-A1- 2 781 373      EP-A1- 3 254 872
EP-A1- 3 403 852      EP-A1- 3 995 323
US-A1- 2014 102 608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a tire.

BACKGROUND OF THE INVENTION

Pneumatic tires, particularly, high-performance tires such as racing tires are required to exert excellent grip performance even when these tires are heated after long running (peak grip performance). JP 2012-158662 A discloses a rubber composition for tire tread that comprises specific carbon black and that is excellent in grip performance from the beginning of running and in peak grip performance

SUMMARY OF THE INVENTION

It is an object of the present invention to provide a tire with improved peak grip performance.
As a result of intensive studies, it has been found that the above-described problem can be solved by a tire having features that a total content of fillers of a rubber composition constituting a tread part is greater than 100 parts by mass based on 100 parts by mass of a rubber component, that a glass transition temperature $Tg_2$ °C of the rubber composition after acetone extraction is lower than -45°C, and that, when a land ratio in a grounding surface of the tread part is defined as R%, $Tg_2$ and R satisfy a predetermined relationship.
That is, the present invention relates to:

a tire comprising a tread part,
wherein the tread part is composed of a rubber composition comprising a rubber component and a filler,
wherein the rubber composition comprises greater than 100 parts by mass of the filler based on 100 parts by mass of the rubber component,
wherein a glass transition temperature $Tg_2$°C of the rubber composition after acetone extraction is lower than -45°C, and
wherein, when a land ratio in a grounding surface of the tread part is defined as R%, $Tg_2$ and R satisfy the following inequality (1).

$$(10 - 1.25\ Tg_2)/R > 1.00 \quad \cdots \quad (1)$$

According to the present invention, a tire with improved peak grip performance is provided.

BRIEF DESCRIPTION OF THE DRAWINGS

FIG. 1 is a schematic view of a grounding surface of a tire when a tread is pressed against a flat surface.
FIG. 2 is a schematic view of a grounding surface of a tire of another embodiment.

DETAILED DESCRIPTION

The tire that is one embodiment of the present invention is a tire comprising a tread part, wherein the tread part is composed of a rubber composition comprising a rubber component and a filler, wherein the rubber composition comprises greater than 100 parts by mass of the filler based on 100 parts by mass of the rubber component, wherein a glass transition temperature $Tg_2$°C of the rubber composition after acetone extraction is less than -45, and wherein, when a land ratio in a grounding surface of the tread part is defined as R %, $Tg_2$ and R satisfy the following inequality (1).

$$(10 - 1.25\ Tg_2)/R > 1.00 \quad \cdots \quad (1)$$

When the land ratio of the tread part on the grounding surface, a content of the filler, and the glass transition temperature $Tg_2$°C of the rubber composition after acetone extraction satisfy the above-described requirements, the peak grip performance of the tire obtained is improved. The reason for that is considered as follows, although the following consideration is not intended to be bound by any theory.

(1) When the glass transition temperature $Tg_2$°C after acetone extraction is lower than -45°C, motility of a polymer becomes high even at low temperature, so that a rubber easily deforms and a grounding area on a road surface is increased. (2), When a total content of fillers based on 100 parts by mass of the rubber component is greater than 100 parts by mass, heat generation of the rubber composition constituting the tread part is increased, so that followability to a road surface is improved also during running at a high temperature in or after the middle of a running period. Furthermore, (3) when the glass transition temperature $Tg_2$°C after acetone extraction is lowered as the land ratio of the tread part on a grounding surface increases, good rigidity is obtained together with the mobility of the rubber and the heat generation. Additionally, with cooperation of these (1) to (3), it is considered that a remarkable effect of improving peak grip performance is achieved.

A glass transition temperature $Tg_1$°C of the rubber composition before the acetone extraction is preferably -15°C or less.

When the glass transition temperature $Tg_1$°C before the acetone extraction is lowered, the mobility of the polymer becomes high even at low temperature, and thus the rubber easily deforms, so that it is considered that the grounding area on a road surface is increased.

An amount S % by mass of sulfur in the rubber component of the rubber composition is preferably 0.95 or less.

When the amount of sulfur in the rubber component is decreased, a polymer chain is prevented from being excessively restrained by vulcanization, heat generation is easily obtained, and it is considered that the peak grip performance can be easily improved.

It is preferable that the rubber composition further comprises a liquid rubber.

When it comprises a liquid rubber, $\tan \delta$ of the rubber composition is increased, adhesiveness on a rubber surface is improved, and it is considered that the peak grip performance can be improved more.

The rubber composition preferably comprises greater than 5 parts by mass and less than 150 parts by mass of carbon black based on 100 parts by mass of the rubber component.

When carbon black is compounded in the rubber composition and its compounding amount is within the above-described range, heat generation of the rubber composition constituting the tread part is improved, and it is considered that the peak grip performance is improved more.

The rubber composition preferably comprises silica having an average primary particle size of 18 nm or less.

When silica having a small particle size is compounded in the rubber composition, the heat generation is improved, and it is considered that the peak grip performance is improved more.

A rubber hardness of the rubber composition is preferably greater than 62 and less than 75.

When the rubber hardness of the rubber composition is within the above-described range, good rigidity is obtained, and it is considered that the peak grip performance is further improved.

A $\tan \delta$ at 0°C (0°C $\tan \delta$) of the rubber composition is preferably greater than 0.40.

When the $\tan \delta$ at 0°C is within the above-described range, it is considered that the peak grip performance can be improved more.

A $\tan \delta$ at 30°C (30°C $\tan \delta$) of the rubber composition is preferably greater than 0.20.

When the $\tan \delta$ at 30°C is within the above-described range, it is considered that the peak grip performance can be improved more.

A complex elastic modulus at 30°C ($E^*_{30}$) of the rubber composition is preferably less than 30 MPa.

When the complex elastic modulus at 30°C of the rubber composition is within the above-described range, heat generation of the rubber composition constituting the tread part increases, and it is considered that the peak grip performance can be improved.

A product (100°C $\tan \delta \times$ R) of 100°C $\tan \delta$ and R of the rubber composition is preferably 5.0 or more.

When the product of 100°C $\tan \delta$ and the land ratio R is 5.0 or more, frictionality on the entire surface of the tread part is stably obtained, and it is considered that good peak grip performance is easily improved.

The rubber composition preferably comprises greater than 5 parts by mass of an ester-based plasticizing agent based on 100 parts by mass of the rubber component.

When the ester-based plasticizing agent is compounded in the rubber composition, it is considered that the peak grip performance can be further improved.

The rubber composition preferably comprises greater than 1 part by mass of an organic cross-linking agent based on 100 parts by mass of the rubber component.

When the organic cross-linking agent is compounded in the rubber composition, a distance between crosslinking points becomes longer as compared with crosslinking with sulfur, which allows for occurrence of much energy loss, and it is considered that good peak grip performance is obtained.

A product of the glass transition temperature $Tg_2$°C of the rubber composition after acetone extraction and the amount S of sulfur in the rubber component is preferably -50 or less.

When $Tg_2$ and S satisfy the above-described relationship, the mobility of the rubber component can be improved, and it is considered that the followability to a road surface is easily secured.

It is preferable that the rubber composition further comprises a resin component having a softening point of 90°C or less.

When the rubber composition comprises the resin component having a softening point of 90°C or less, it is considered that the peak grip performance can be further improved.

<Definition>

A "standardized rim" is a rim defined for each tire in a standard system including a standard, on which the tire is based, by the standard, for example, a "standard rim" in JATMA, "Design Rim" in TRA, or "Measuring Rim" in ETRTO.

A "standardized internal pressure" is an air pressure defined for each tire in a standard system including a standard, on which the tire is based, by the standard, for example, a "MAXIMUM AIR PRESSURE" in JATMA, a maximum value described in the table "TIRE LOAD LIMITS AT VARIOUS COLD INFLATION PRESSURES" in TRA, or "INFLATION PRESSURE" in ETRTO.

A "standardized state" is a state in which the tire is rim-assembled to a standardized rim, filled with air at a standardized internal pressure, and applied with no load. Besides, unless otherwise noted, in the present specification, a size of each part of a tire is measured in the above-described standardized state.

A "standardized load" means a load defined for each tire in a standard system including a standard, on which the tire is based, by the standard, for example, the "MAXIMUN LOAD CAPACITY" in JATMA, the maximum value described in the table "TIRE LOAD LIMITS AT VARIOUS COLD INFLATION PRESSURES" in the TRA, or "LOAD CAPACITY" in ETRTO.

The "land ratio R" means a ratio of an actual grounding area to a total grounding area in a grounding surface of the tread part. Methods for measuring the total grounding area and the actual grounding area will be described later.

The "acetone extraction" means extraction of a soluble component performed by immersing a vulcanized rubber test piece in acetone for 72 hours according to JIS K 6229. In a case where a test piece to be subjected to the acetone extraction is prepared by cutting out the test piece from a tire, the test piece is cut out of a tread part of the tire such that a tire circumferential direction becomes a long side and a tire radial direction becomes a thickness direction.

A "content of oil" also comprises an amount of oil contained in an oil-extended rubber.

<Measuring method>

The "grounding shape of the tread part" is obtained by assembling the tire to a standardized rim, filling the tire with air at a standardized internal pressure, and leaving the tire to stand at 25°C for 24 hours, followed by applying ink to a tire tread surface, applying a standardized load on the tire to press the tire tread surface on a paper at a camber angle of 0°, and performing transcription to the paper. The transcription is performed at five sites of the tire by rotating the tire in 72 degree increments in the circumferential direction. Accordingly, grounding shapes are obtained five times.

The "total grounding area" is defined as an average value of areas of five sites obtained from an outer profile in the grounding shape of the tread part. The "actual grounding area" is defined as an average value of areas of the five inked sites in the grounding shape of the tread part. That is, the land ratio is calculated by the following equation.

Land ratio R = average value of areas of the five inked sites / average value of areas of five sites obtained from outer profile of grounding shape

The "glass transition temperature (Tg) of the rubber composition" is determined as a temperature corresponding to the greatest value of tan $\delta$ (tan $\delta$ peak temperature) in a temperature distribution curve of tan $\delta$ that is obtained by measurement made using EPLEXOR series manufactured by gabo Systemtechnik GmbH under a condition of a frequency of 10 Hz, an initial strain of 10%, an amplitude of $\pm 0.5\%$, and a temperature rising rate of 3°C/min between -70°C and 40°C. A sample for measurement of Tg is prepared in the same manner as in a case for 30°C tan $\delta$ described later. Besides, in the present invention, a glass transition temperature (°C) of the rubber composition before acetone extraction is defined as $Tg_1$, and a glass transition temperature (°C) of the rubber composition after acetone extraction is defined as $Tg_2$.

The "amount S of sulfur in the rubber component" is an amount (% by mass) of sulfur measured by an oxygen combustion flask method according to JIS K 6233:2016. A sample for measurement of the amount of sulfur is prepared by being cut out of a tire.

A "30°C tan $\delta$" is a loss tangent measured under a condition of a temperature at 30°C, a frequency of 10 Hz, an initial strain of 5%, and a dynamic strain of 1%. A sample for measurement of the loss tangent is a vulcanized rubber composition having a length of 20 mm, a width of 4 mm, and a thickness of 1 mm. In a case where the sample is prepared by being cut out of a tire, the sample is cut out of the tread part of the tire such that the tire circumferential direction becomes a long side and the tire radial direction becomes a thickness direction.

A "0°C tan $\delta$" is a loss tangent measured under a condition of a temperature at 0°C, a frequency of 10 Hz, an initial strain of 10%, and a dynamic strain of 2.5%. A sample for measurement of this is prepared in the same manner in the case for 30°C tan $\delta$.

A "100°C tan $\delta$" is a loss tangent measured under a condition of a temperature at 100°C, a frequency of 10 Hz, an initial strain of 10%, and a dynamic strain of 2.5%. A sample for measurement of this is prepared in the same manner in the case for 30°C tan $\delta$.

An "$E^*_{30}$" is a complex elastic modulus (MPa) measured under a condition of a temperature at 30°C, a frequency of 10 Hz, an initial strain of 5%, and a dynamic strain of 1%. A sample for measurement of the complex elastic modulus is prepared in the same manner in the case for 30°C tan $\delta$.

A "rubber hardness" is a Shore hardness (Hs) measured at 23°C in accordance with JIS K 6253-3:2012 using a type-A durometer. A sample for measurement of Shore hardness is prepared by being cut out such that the tire radial direction becomes a thickness direction. Moreover, the measurement is made by pressing a measuring instrument against the sample from the grounding-surface side of the sample for measurement of the hardness.

A "styrene content" is a value calculated by $^1$H-NMR measurement and is applied to a rubber component having a repeating unit derived from styrene such as, for example, a SBR. A "vinyl content (1,2-bond butadiene unit amount)" is a value calculated in accordance with JIS K 6239-2:2017 by an infrared absorption spectrometry and is applied to a rubber component having a repeating unit derived from butadiene such as, for example, a SBR and a BR. A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). The Mw is applied to, for example, a SBR, a BR, or the like.

An "average primary particle size of carbon black" can be calculated by observing carbon black with a transmission or scanning electron microscope, measuring 400 or more primary particles of carbon black observed in the field of view, and averaging them. A "nitrogen adsorption specific surface area ($N_2$SA) of carbon black" is measured according to JIS K 6217-2:2017. An "oil absorption amount (DBP oil absorption amount (OAN)) of carbon black" is measured according to JIS K6217-4:2017.

An "average primary particle size of silica" can be calculated by observing silica with a transmission or scanning electron microscope, measuring 400 or more primary particles of silica observed in the field of view, and averaging them. A "nitrogen adsorption specific surface area ($N_2$SA) of silica" is measured by a BET method according to ASTM D3037-93.

A "softening point of the resin component" is a temperature at which a sphere drops when the softening point specified in JIS K 6220-1: 2015 7.7 is measured with a ring and ball softening point measuring device.

A procedure for producing a tire that is one embodiment of the present invention will be described below in detail. However, the following descriptions are illustrative for explaining the present invention and are not intended to limit the technical scope of the present invention to this description range only.

<Tire>

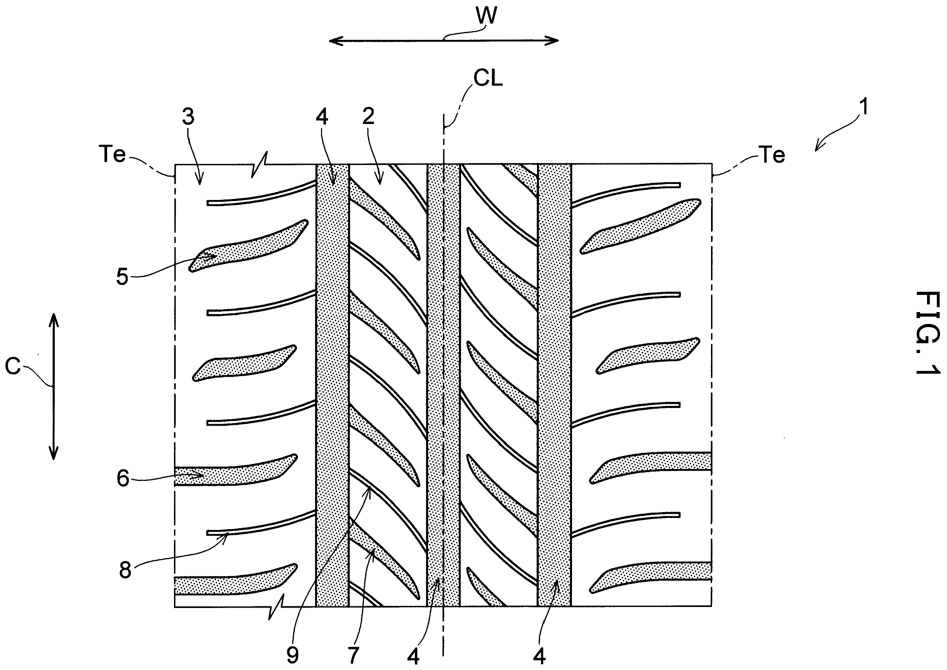

FIG. 1 is a schematic view of a grounding surface of a tread. A tread pattern is formed on a tread surface 1 constituting a tire according to the present invention. The tire having the grounding surface of FIG. 1 is appropriately used as a tire for a passenger car.

In FIG. 1, the tread has a plurality of circumferential grooves 4. The circumferential grooves 4 linearly extend along a circumferential direction C. However, the circumferential grooves are not limited to such an aspect and may extend along the circumferential direction, for example, in a wavy, sinusoidal, or zigzag shape. Although three circumferential grooves 4 are provided in FIG. 1, the number of the circumferential groove is not particularly limited in the present invention and may be, for example, 2 to 5. In the present specification, the "circumferential grooves" refer to grooves continuously extending in the tire circumferential direction C.

Shoulder land parts 3 are a pair of land parts formed between the circumferential grooves 4 and tread ends Te. A center land part 2 is a land part formed between the pair of the shoulder land parts 3. Although two center land parts 2 are provided in FIG. 1, the number of the center land part is not particularly limited and may be, for example, 1 to 5.

In FIG. 1, the shoulder land parts 3 are provided with: width direction grooves 8 one end of which communicates with a circumferential groove 4 and width direction grooves 5 and 6 both ends of which do not communicate with the circumferential grooves. Moreover, the center land part 2 is provided with: width direction grooves 7 one end of which communicates with a circumferential groove 4 and grooves 9 that extend in the tire width direction and across the center land part 2, both ends of which communicate with circumferential grooves. However, the present invention is not limited to such an aspect.

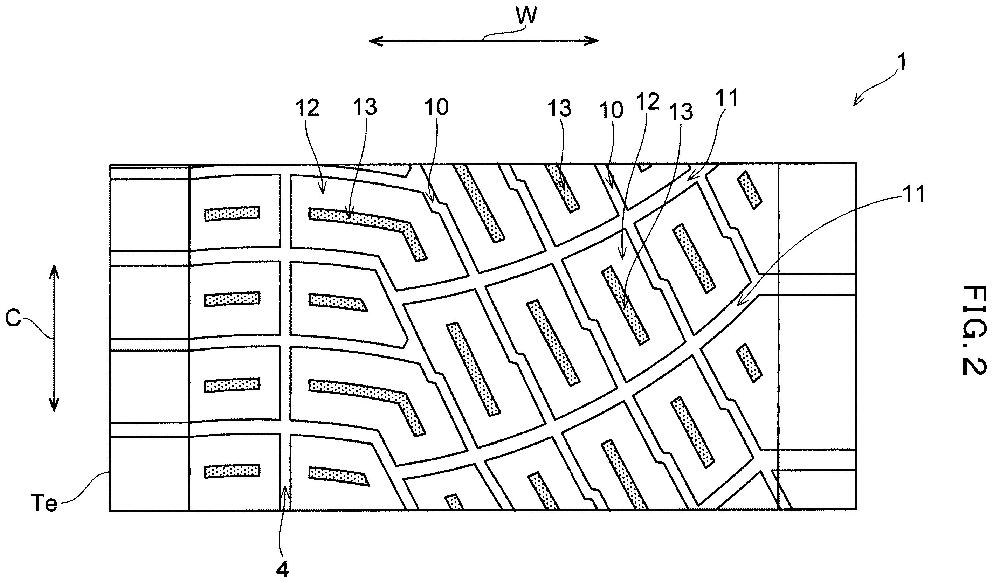

FIG. 2 is a schematic view of a grounding surface of a tire of another embodiment. The tire having the grounding surface of FIG. 2 is appropriately used as a racing tire and appropriately used as a racing tire for off-road running among racing tires.

In FIG. 2, the tread part 1 has a plurality of circumferential inclined grooves 10 extending diagonally relative to the tire circumferential direction C, the circumferential grooves 4 linearly extending along the circumferential direction C, a plurality of width direction inclined grooves 11 extending diagonally relative to the tire width direction W, and width direction grooves 7 each extending from a tread end in the tire width direction and one end of which communicates with a circumferential groove 4, and a plurality of blocks 12 are partitioned and formed on land parts formed with these grooves. The blocks 12 may have depressions (which are referred to as "recesses 13" hereinafter).

In a case where the block 12 has a recess 13, a ratio of a volume of the recess 13 to a volume of the block 12 is preferably 0.08 or more, more preferably 0.10 or more, further preferably 0.12 or more. Moreover, the ratio of the volume of the recess 13 to the volume of the block 12 is preferably 0.25 or less, more preferably 0,22 or less, further preferably 0.20 or less.

In the tire of the present invention, the land ratio R in the grounding surface of the tread part is preferably 50% or more, more preferably 52% or more, further preferably 55% or more, particularly preferably 68% or more. When the land ratio R is less than 50%, deformation of the tread part becomes large, and it is considered that an effect of improving grip performance is reduced. On the other hand, the land ratio R is preferably 85% or less, more preferably 80% or less, further preferably 75% or less, particularly preferably 72% or less. When the land ratio R is greater than 85%, the rubber of the tread part cannot sufficiently deform, and heat generation becomes difficult to occur. Accordingly, the effect of improving grip performance tends to be reduced.

The glass transition temperature $Tg_2$ of the rubber composition of the present invention after acetone extraction is lower than -45°C, preferably - 46°C or less, more preferably -50°C or less, further preferably -52°C or less, further preferably -54°C or less, further preferably -56°C or less, further preferably -60°C or less, particularly preferably -62°C or less. On the other hand, a lower limit value of the glass transition temperature $Tg_2$ of the rubber composition of the present invention after acetone extraction is preferably -85°C or more, more preferably -80°C or more, further preferably less than -75°C or more, from the viewpoint of the effects of the present invention.

In the tire of the present invention, when the glass transition temperature of the rubber composition after acetone extraction is defined as $Tg_2$ °C, and the land ratio in the grounding surface of the tread part is defined as R%, $Tg_2$ and R satisfy the following inequality (1).

$$(10 - 1.25\ Tg_2)/R > 1.00 \quad \cdots \quad (1)$$

Here, there is a relationship in which the value in the inequality (1) decreases as R increases, and conversely, it increases as R decreases, whereas the value in the inequality (1) increases as $Tg_2$ decreases, and conversely, it decreases as $Tg_2$ increases. Accordingly, by paying attention to this point, adjustment can be made so that $Tg_2$ and R satisfy the inequality (1) by adjusting $Tg_2$ and R.

The value in the inequality (1) is greater than 1.00, preferably greater than 1.10, further preferably greater than 1.20 When the value in the inequality (1) is greater than 1.00, good rigidity is obtained together with high degrees of the mobility and heat generation of the rubber, and thus the peak grip performance is improved. Moreover, an upper limit value of the value in the inequality (1) is not particularly limited and is preferably 3.00 or less, more preferably 2.50 or less, further preferably 2.00 or less, further preferably 1.80 or less, particularly preferably 1.60 or less, from the viewpoint of the effects of the present invention.

The glass transition temperature $Tg_1$ of the rubber composition of the present invention before acetone extraction is preferably -10°C or less, more preferably -12°C or less, further preferably -13°C or less, further preferably - 15°C or less, further preferably -18°C or less, further preferably -20°C or less, further preferably -21°C or less, further preferably -25°C or less, particularly preferably -30°C or less. On the other hand, a lower limit value of the glass transition temperature $Tg_1$ of the rubber composition of the present invention before acetone extraction is preferably -55°C or more, more preferably -50°C or more, further preferably lower than -45°C or more, particularly preferably less than -42°C or more, from the viewpoint of the effects of the present invention.

A difference between the glass transition temperatures of the rubber composition of the present invention before and after acetone extraction, that is, $Tg_1 - Tg_2$, is preferably 25°C or more, more preferably 30°C or more, further preferably 32°C or more, from the viewpoint of the effects of the present invention. Moreover, $Tg_1 - Tg_2$ is preferably 55°C or less, more preferably 48°C or less, further preferably 40°C or less, from the viewpoint of the effects of the present invention.

The amount S of sulfur in the rubber component of the rubber composition of the present invention is preferably 1.3% by mass or less, more preferably 1.2% by mass or less, further preferably 0.95% by mass or less, further preferably 0.92% by mass or less, further preferably 0.90% by mass or less, from the viewpoint of prevention of reduction of the mobility due to excessive restraint of polymer molecule chains in the rubber component. On the other hand, the amount S of sulfur in the rubber component of the rubber composition of the present invention is preferably 0.50% by mass or more, more preferably 0.55% by mass or more, further preferably 0.60% by mass or more, particularly preferably 0.65% by mass or more, from the viewpoint of the effects of the present invention.

The product ($Tg_2 \times S$) of the glass transition temperature ($Tg_2$) of the rubber composition of the present invention after acetone extraction and the amount S of sulfur in the rubber component is preferably -40 or less, more preferably -45 or less, further preferably -48 or less, particularly preferably -50 or less, from the viewpoint of the effects of the present invention. Moreover, $Tg_2 \times S$ is preferably -70 or more, more preferably -67 or more, further preferably -65 or more, from the viewpoint of the effects of the present invention.

The rubber hardness of the rubber composition of the present invention is preferably greater than 62, more preferably greater than 63, further preferably greater than 64, particularly preferably greater than 65, from the viewpoint of improving peak grip performance by obtaining good rigidity. Moreover, it is preferably less than 75, more preferably less than 74, further preferably less than 73, particularly preferably less than 72, from the viewpoint of grip performance.

The 0°C tan $\delta$ of the rubber composition of the present invention is preferably greater than 0.40, more preferably greater than 0.42, further preferably greater than 0.44, from the viewpoint of grip performance. On the other hand, the 0°C tan $\delta$ of the rubber composition is preferably less than 1.00, more preferably less than 0.85, further preferably less than 0.75, from the viewpoint of blow resistance.

The 30°C tan $\delta$ of the rubber composition of the present invention is preferably greater than 0.20, from the viewpoint of grip performance.

A 30°C tan $\delta$ in a case of using the rubber composition of the present invention for a racing tire is more preferably greater than 0.35, further preferably greater than 0.40, particularly preferably greater than 0.45. Moreover, the 30°C tan $\delta$ in the case of using it for a racing tire is preferably less than 0.55, more preferably less than 0.52, further preferably less than 0.50, from the viewpoint of blow resistance.

A 30°C tan $\delta$ in a case of using the rubber composition of the present invention for a tire for a passenger car is more preferably greater than 0.24, further preferably greater than 0.25, particularly preferably greater than 0.30. Moreover, the 30°C tan $\delta$ in the case of using it for a tire for a passenger car is preferably less than 0.40, more preferably less than 0.38, further preferably less than 0.35.

The 100°C tan $\delta$ of the rubber composition of the present invention is preferably greater than 0.08, from the viewpoint of grip performance.

A 100°C tan $\delta$ in the case of using the rubber composition of the present invention for a racing tire is preferably greater than 0.30, more preferably greater than 0.33. Moreover, the 100°C tan $\delta$ in the case of using it for a racing tire is preferably less than 0.45, more preferably less than 0.40, from the viewpoint of blow resistance.

A 100°C tan $\delta$ in the case of using the rubber composition of the present invention for a tire for a passenger car is preferably greater than 0.08, more preferably greater than 0.09. Moreover, the 100°C tan $\delta$ in the case of using it for a tire for a passenger car is preferably less than 0.20, more preferably less than 0.18, from the viewpoint of blow resistance.

In the tire of the present invention, the product of the 100°C tan $\delta$ and the land ratio R% is preferably 5.0 or more. Moreover, an upper limit value of the product of the 100°C tan $\delta$ and the land ratio R% is not particularly limited and is preferably 35 or less, more preferably 32 or less, further preferably 30 or less, from the viewpoint of the effects of the present invention.

A product of the 100°C tan $\delta$ and a land ratio R% in the case of using the rubber composition of the present invention for a racing tire is preferably 15 or more, more preferably 20 or more, further preferably 21 or more.

A product of the 100°C tan $\delta$ and a land ratio R% in the case of using the rubber composition of the present invention for a tire for a passenger car is more preferably 6.0 or more, further preferably 7.0 or more. The product of the 100°C tan $\delta$ and the land ratio R% in the case of using it for a tire for a passenger car is preferably 15 or less, more preferably 12 or less, further preferably 10 or less.

The complex elastic modulus $E^*_{30}$ at 30°C of the rubber composition of the present invention is preferably less than 30 MPa, from the viewpoint of grip performance.

In the case of using the rubber composition of the present invention for a racing tire, an $E^*_{30}$ is more preferably less than 25 MPa, further preferably less than 20 MPa. Moreover, the $E^*_{30}$ in the case of using it for a racing tire is preferably greater than 7 MPa, further preferably greater than 10 MPa, further preferably greater than 15 MPa.

In the case of using the rubber composition of the present invention for a tire for a passenger car, an $E^*_{30}$ is more preferably less than 12 MPa, further preferably less than 10 MPa. Moreover, the $E^*_{30}$ in the case of using it for a tire for a passenger car is preferably greater than 2 MPa, more preferably greater than 3 MPa, further preferably greater than 4 MPa.

Besides, $Tg_1$, $Tg_2$, the rubber hardness, 0°C tan $\delta$, 30°C tan $\delta$, and $E^*_{30}$ at 30°C of the rubber composition of the present invention can be appropriately adjusted depending on types or compounding amounts of rubber components, fillers, softening agents, and the like which are described later. For example, $Tg_1$ can be lowered by lowering a glass transition point of the rubber component, decreasing a styrene content in the rubber component, lowering a glass transition point of a softening agent, or the like. $Tg_2$ can be lowered by lowering a glass transition point of the rubber component, decreasing a styrene content in the rubber component, or the like. The rubber hardness can be enhanced by increasing an amount of a filler in the rubber composition or decreasing a content of a softening agent such as oil. The 0°C tan $\delta$, 30°C tan $\delta$, and 100°C tan $\delta$ can be increased by increasing an amount of a filler contained in the rubber component, decreasing a particle size of the filler, or the like. The $E^*_{30}$ can be increased by increasing an amount of a filler in the rubber component, decreasing a content of a softening agent, or the like.

[Rubber composition]

The tread part of the present invention is characterized in that the above-mentioned land ratio R in the grounding surface of the tread part and the glass transition temperature $Tg_2$ of the rubber composition after acetone extraction satisfy the inequality: $(10 - 1.25\ Tg_2)/R > 1.00$. The rubber composition constituting the tread part can be produced with raw materials described below in accordance with the above-described required physical properties, etc. of the rubber composition. The rubber composition will be described below in detail.

<Rubber component>

The rubber composition of the present invention comprises a rubber component. The rubber composition preferably comprises a styrene-butadiene rubber (SBR) as a rubber component, which may be a rubber component consisting of a SBR. Moreover, the rubber composition may comprise an isoprene-based rubber and/or a butadiene rubber (BR) as a rubber component. In a case where the rubber composition is used for a tire for a passenger car, use of the SBR and BR in combination is preferable, and use of the SBR, BR, and the isoprene-based rubber in combination is more preferable.

(SBR)

The SBR is not particularly limited, examples of which include an unmodified solution-polymerized SBR (S-SBR), an unmodified emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. An oil-extended SBR or a non-oil extended SBR may be used as a SBR.

Since the SBR is excellent in viscoelastic property in a region where it has high correlation with peak grip performance and is excellent in affinity for and reactivity with a filler, it is considered that it exerts an effect of improving peak grip performance.

The SBRs listed above may be used alone, or two or more thereof may be used in combination. As the SBRs enumerated above, for example, those commercially available from Asahi Kasei Corporation, JSR Corporation, Sumitomo Chemical Co., Ltd., Zeon Corporation, ZS Elastomer Co., Ltd., etc. can be used.

A styrene content of the SBR is preferably 5% by mass or more, more preferably 10% by mass or more, further preferably 15% by mass or more, from the viewpoints of peak grip performance and abrasion resistance. Moreover, it is preferably 35% by mass or less, more preferably 30% by mass or less, further preferably 25% by mass or less, from the viewpoints of temperature dependency of grip performance and blow resistance. Besides, the styrene content of the SBR is measured by the above-described measuring method.

A vinyl content of the SBR is preferably 10 mol% or more, more preferably 12 mol% or more, further preferably 15 mol% or more, from the viewpoints of ensuring reactivity with the filler, peak grip performance, and abrasion resistance. Moreover, the vinyl content of the SBR is preferably 70 mol% or less, more preferably 60 mol% or less, further preferably 50 mol% or less, particularly preferably 40 mol% or less, from the viewpoints of prevention of increase in temperature dependence, elongation at break, and abrasion resistance. Besides, the vinyl content of the SBR is measured by the above-described measurement method.

A weight-average molecular weight (Mw) of the SBR is preferably 150,000 or more, more preferably 200,000 or more, further preferably 250,000 or more, from the viewpoint of peak grip performance. Moreover, the weight-average molecular weight is preferably 2,000,000 or less, more preferably 1,800,000 or less, further preferably 1,500,000 or less, from the viewpoint of cross-linking uniformity. Besides, the weight-average molecular weight of the SBR is measured by the above-described measurement method.

A content of the SBR when compounded in the rubber component is preferably 30% by mass or more, more preferably 40% by mass or more, further preferably 50% by mass or more, particularly preferably 60% by mass or more, from the viewpoints of the effects of the present invention. Moreover, an upper limit value of the content of the SBR in the rubber component is not particularly limited and can be, for example, 100% by mass, 95% by mass or less, 90% by mass or less, 85% by mass or less, or 80% by mass or less.

(BR)

The BR is not particularly limited, and those common in the tire industry can be used, such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination. Besides, the cis content of the BR is measured by the above-described measuring method.

As the high cis BR, for example, those commercially available form Zeon Corporation, Ube Industries, Ltd., JSR Corporation, etc. can be used. When the rubber composition comprises the high cis BR, a low temperature property and abrasion resistance can be improved. The cis content of the high cis BR is preferably 95 mol% or more, more preferably 96 mol% or more, further preferably 97 mol% or more, particularly preferably 98 mol% or more. Besides, the cis content of the **BR** is measured by the above-described measuring method.

A weight-average molecular weight (Mw) of the **BR** is preferably 300,000 or more, more preferably 350,000 or more, further preferably 400,000 or more, from the viewpoint of abrasion resistance. Moreover, it is preferably 2,000,000 or less, more preferably 1,500,000 or less, further preferably 1,000,000 or less, from the viewpoints of cross-linking uniformity, etc. Besides, the Mw of the **BR** is measured by the above-described measuring method.

A content of the **BR** when compounded in the rubber component is preferably 60% by mass or less, more preferably 50% by mass or less, further preferably 40% by mass or less, from the viewpoint of the effects of the present invention. Moreover, a lower limit value of the content is not particularly limited and can be, for example, 1% by mass or more, 3% by mass or more, 5% by mass or more, or 10% by mass or more, from the viewpoint of peak grip performance.

(Isoprene-based rubber)

Examples of the isoprene-based rubber include a natural rubber (NR), an isoprene rubber (IR), a reformed NR, a modified NR, a modified IR, and the like. As the NR, for example, those common in the tire industry such as SIR20, RSS#3, and TSR20 can be used. These isoprene-based rubbers may be used alone, or two or more thereof may be used in combination.

A content of the isoprene-based rubber when compounded in the rubber component is preferably 50% by mass or less, more preferably 40% by mass or less, further preferably 30% by mass or less, particularly preferably 20% by mass or less, from the viewpoint of peak grip performance. Moreover, a lower limit value of the content is not particularly limited and can be, for example, 1% by mass or more, 3% by mass or more, 5% by mass or more, or 10% by mass or more, from the viewpoint of initial grip performance.

(Other rubber components)

The rubber component may also comprise other rubber components other than the SBRs, the BRs, and the isoprene-based rubbers to an extent so as not to affect the effects of the present invention. As the other rubber components, a cross-linkable rubber component commonly used in the tire industry can be used, the example of which include, for example, diene-based rubbers such as a styrene-isoprene rubber (SIR), a styrene-isoprene-butadiene rubber (SIBR), a chloroprene rubber (CR), an acrylonitrile-butadiene rubber (NBR); and non-diene-based rubbers other than butyl-based rubbers, such as a hydrogenated nitrile rubber (HNBR), an ethylene propylene rubber, a polynorbornene rubber, a silicone rubber, a polyethylene chloride rubber, a fluororubber (FKM), an acrylic rubber (ACM), and a hydrin rubber. These other rubber components may be used alone, or two or more thereof may be used in combination. A content of the diene-based rubber in the rubber component is preferably 80% by mass or more. Moreover, the rubber component may or may not comprise a known thermoplastic elastomer in addition to the above-described rubber components.

<Filler>

The rubber composition of the present invention comprises a filler. The rubber composition preferably comprises carbon black and/or silica and more preferably comprises carbon black, as a filler. Moreover, the filler may be prepared as a filler consisting of carbon black and silica or as a filler consisting of carbon black.

(Silica)

Silica is not particularly limited, and those common in the tire industry can be used, such as, for example, silica prepared by a dry process (anhydrous silica) and silica prepared by a wet process (hydrous silica). Moreover, in addition to the above-described silica, silica made from a biomass material such as rice husks may be used. These silica may be used alone, or two or more thereof may be used in combination.

An average primary particle size of silica is preferably 20 nm or less, more preferably 16 nm or less, further preferably 15 nm or less, from the viewpoint of peak grip performance. Moreover, it is preferably 5 nm or more, more preferably 8 nm or more, further preferably 10 nm or more, from the viewpoint of dispersibility. Besides, the average primary particle size of silica is measured by the above-described measuring method.

A nitrogen adsorption specific surface area ($N_2SA$) of silica is preferably 100 $m^2/g$ or more, more preferably 120 $m^2/g$ or more, further preferably 140 $m^2/g$ or more, particularly preferably 150 $m^2/g$ or more, from the viewpoint of securing reinforcing property and peak grip performance. Moreover, it is preferably 350 $m^2/g$ or less, more preferably 300 $m^2/g$ or less, further preferably 250 $m^2/g$ or less, from the viewpoint of dispersibility. Besides, the $N_2SA$ of silica is measured by the above-described measuring method.

In the case of using the rubber composition of the present invention for a racing tire, a content of silica when compounded based on 100 parts by mass of the rubber component is preferably 50 parts by mass or less, more preferably 40 parts by mass or less, further preferably 30 parts by mass or less, particularly preferably less than 10 parts by mass, from the viewpoint of reinforcing property for the rubber composition. In the case of using the rubber composition of the present invention for a racing tire, the rubber composition may not comprise silica.

In the case of using the rubber composition of the present invention for a tire for a passenger car, a content of silica when compounded based on 100 parts by mass of the rubber component is preferably 80 parts by mass or more, more preferably 100 parts by mass or more, further preferably 120 parts by mass or more, from the viewpoint of peak grip performance. Moreover, an upper limit value of the content is not particularly limited and is preferably 300 parts by mass or less, more preferably 250 parts by mass or less, further preferably 200 parts by mass or less.

(Carbon black)

Carbon black is not particularly limited, and those common in the tire industry can be used, such as, for example, GPF, FEF, HAF, ISAF, and SAF. These carbon black may be used alone, or two or more thereof may be used in combination. Moreover, from the viewpoint of a life cycle assessment, in addition to above-described carbon black, carbon black made from lignin or recycled carbon black obtained from a product such as a tire containing carbon black by pyrolysis or the like may be used.

An average primary particle size of carbon black is preferably 35 nm or less, more preferably 30 nm or less, further preferably 28 nm or less, further preferably 20 nm or less, particularly preferably 19 nm or less, from the viewpoints of reinforcing property and peak grip performance. Moreover, it is preferably 10 nm or more, more preferably 12 nm or more, further preferably 15 nm or more, from the viewpoint of dispersibility. Besides, the average primary particle size of carbon black is measured by the above-described measuring method.

A nitrogen adsorption specific surface area ($N_2SA$) of carbon black is preferably 50 $m^2/g$ or more, more preferably 70 $m^2/g$ or more, further preferably 100 $m^2/g$ or more, particularly preferably 120 $m^2/g$ or more, from the viewpoints of reinforcing property and peak grip performance. Moreover, it is preferably 250 $m^2/g$ or less, more preferably 220 $m^2/g$ or less, from the viewpoint of dispersibility. Besides, the $N_2SA$ of carbon black is measured by the above-described measuring method.

An oil absorption amount (DBP oil absorption amount (OAN)) of carbon black is preferably 85 mL/100 g or more, more preferably 90 mL/100 g or more, further preferably 100 mL/100 g or more, from the viewpoints of reinforcing property and peak grip performance. Moreover, the OAN is preferably 250 mL/100 g or less, more preferably 225 mL/100 g or less, further preferably 200 mL/100 g or less, from the viewpoint of grip performance. Besides, the OAN of carbon black is measured by the above-described method.

In the case of using the rubber composition of the present invention for a racing tire, a content of carbon black when compounded based on 100 parts by mass of the rubber component is preferably 40 parts by mass or more, preferably greater than 50 parts by mass, further preferably 100 parts by mass or more, from the viewpoints of weather resistance and reinforcing property. Moreover, an upper limit value of the content is not particularly limited and is preferably 190 parts by mass or less, more preferably 150 parts by mass or less, further preferably 140 parts by mass or less.

In the case of using the rubber composition of the present invention for a tire for a passenger car, a content of carbon black when compounded based on 100 parts by mass of the rubber component is preferably greater than 1 part by mass, preferably 3 parts by mass or more, further preferably 5 parts by mass or more, from the viewpoints of weather resistance and reinforcing property. Moreover, it is preferably less than 150 parts by mass, more preferably less than 135 parts by mass, further preferably less than 120 parts by mass, from the viewpoint of fuel efficiency.

(Other fillers)

As fillers other than silica and carbon black, those conventionally and commonly used in the tire industry can be compounded, such as aluminum hydroxide, calcium carbonate, alumina, clay, and talc. Moreover, biochar may be used.

In the present invention, a total content of fillers based on 100 parts by mass of the rubber component is greater than 100 parts by mass, preferably greater than 105 parts by mass, more preferably greater than 110 parts by mass, further preferably 120 parts by mass or more, particularly preferably 130 parts by mass or more, from the viewpoint of peak grip performance. Moreover, an upper limit value of the total content of fillers based on 100 parts by mass of the rubber component is preferably 200 parts by mass or less, more preferably 180 parts by mass or less, further preferably 150 parts by mass or less, particularly preferably 140 parts by mass or less, from the viewpoint of the effects of the present invention.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. The rubber component preferably comprises a sulfide-based silane coupling agent among them. As a silane coupling agent, for example, those commercially available from Evonik Degussa GmbH, etc. can be used. These silane coupling agents may be used alone, or two or more thereof may be used in combination.

A content of the silane coupling agent when compounded based on 100 parts by mass of the rubber component is preferably greater than 1.0 part by mass, more preferably greater than 2.0 parts by mass, more preferably greater than 3.0 parts by mass, further preferably greater than 5.0 parts by mass, particularly preferably 8.0 parts by mass or more, from the viewpoint of enhancing dispersibility of silica. Moreover, it is preferably less than 20 parts by mass, more preferably less than 15 parts by mass, further preferably less than 12 parts by mass, from the viewpoint of preventing deterioration of abrasion resistance.

A content of the silane coupling agent based on 100 parts by mass of silica is preferably greater than 2.0 part by mass, more preferably greater than 4.0 parts by mass, further preferably 6.0 parts by mass or more, from the viewpoint of enhancing dispersibility of silica. Moreover, it is preferably less than 25 parts by mass, more preferably less than 20 parts by mass, further preferably less than 18 parts by mass, from the viewpoints of cost and processability.

<Softening agent>

The rubber composition according to the present invention preferably comprises a softening agent. Examples of the softening agent include, for example, a resin component, oil, a liquid rubber, an ester-based plasticizing agent, and the like. Besides, examples of the softening agent also include an extending oil, an extending resin, and an extending liquid rubber component, etc. of rubber components that are subjected to oil extension, resin extension, and liquid rubber extension. These softening agents may be those derived from petroleum or those derived from biomass. Moreover, low-molecular-weight hydrocarbon components obtained by pyrolyzing used tires or products containing various components and extracting them may be used as softening agents.

(Resin component)

Examples of the resin component include, but not particularly limited to, a petroleum resin, a terpene-based resin, a rosin-based resin, a phenol-based resin, and the like which are commonly used in the tire industry. These resin components may be used alone, or two or more thereof may be used in combination.

Examples of the petroleum resin include a C5-based petroleum resin, an aromatic petroleum resin, a C5-C9-based petroleum resin, and the like. The aromatic petroleum resin is preferable from the viewpoint of the effects of the present invention.

In the present specification, the "C5-based petroleum resin" means a resin obtained by polymerizing C5 fractions. Examples of C5 fractions include, for example, petroleum fractions having 4 to 5 carbon atoms, such as cyclopentadiene, pentene, pentadiene, and isoprene. Dicyclopentadiene resin (DCPD resin) is appropriately used as a C5-based petroleum resin.

In the present specification, the "aromatic petroleum resin" means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, and methylindene. As specific example of the aromatic petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and the copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, the "C5-C9-based petroleum resin" means a resin obtained by copolymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin, a terpene phenol resin, and a terpene styrene resin. These terpene-based resins may be used alone, or two or more thereof may be used in combination. Among them, the terpene styrene resin is preferable for the reason that its compatibility with the SBR is particularly good and sulfur is easily dispersed in the rubber component.

In the present specification, the "polyterpene resin" means a resin made from at least one selected from terpene compounds such as α-pinene, β-pinene, limonene, and dipentene. The terpene phenol resin is a resin made from the terpene compound and a phenol-based compound. The terpene styrene resin is a resin made from the terpene compound and styrene.

The terpene-based resin may be one subjected to hydrogenation treatment (for example, hydrogenated polyterpene resin, hydrogenated terpene-styrene resin). Hydrogenation treatment of the terpene-based resin can be performed by a known method. Alternatively, a commercially available hydrogenated resin can also be used.

In the present invention, a commercially available product may be used as the terpene-based resin. Those manufactured and sold by YASUHARA CHEMICAL CO., LTD., etc. are shown as an example of such a commercially available product.

Examples of the rosin-based resin include, but not particularly limited to, for example, a natural resin rosin, a rosin-modified resin obtained by modifying it by hydrogenation, disproportionation, dimerization, or esterification, and the like.

Examples of the phenol-based resin include, but not particularly limited to, a phenol formaldehyde resin, an alkylphenol formaldehyde resin, an alkyl phenol acetylene resin, an oil-modified phenol formaldehyde resin, and the like.

A softening point of the resin component is preferably 200°C or lower, more preferably 150°C or lower, from the viewpoint of peak grip performance. Moreover, it is preferably 70°C or higher, more preferably 80°C or higher, from the viewpoint of processability. Besides, the softening point of the resin component is measured by the above-described measuring method. Moreover, the softening point of the resin is a value generally higher by about 45°C ± 5°C than a glass transition point of a resin measured by DSC.

A content of the resin component when compounded based on 100 parts by mass of the rubber component is preferably greater than 15 parts by mass, more preferably greater than 20 part by mass, further preferably greater than 25 parts by mass, further preferably greater than 30 parts by mass, particularly preferably 35 parts by mass or more, from the viewpoint of peak grip performance. Moreover, it is preferably less than 90 parts by mass, more preferably less than 70 parts by mass, further preferably less than 60 parts by mass, particularly preferably less than 50 parts by mass, from the viewpoint of processability.

(Oil)

Examples of oil include, for example, process oils, vegetable oils and fats, animal oils and fats, and the like. Examples of the process oils include paraffinic process oils, naphthenic process oils, aromatic process oils, and the like. Moreover, a process oil containing a low content of a polycyclic aromatic compound (PCA) can also be used for environmental measures. Examples of the process oil having a low PCA content include mild extracted solvate (MES), treated distillate aromatic extract (TDAE), a heavy naphthenic oil, and the like. From the viewpoint of a life cycle assessment, in addition to the above-described oils, one obtained by appropriately refining used lubricating oil after use for a rubber mixing machine, an engine, or the like or waste cooking oil used in a cooking facility may also be used.

A content of oil when compounded based on 100 parts by mass of the rubber component is preferably greater than 5 part by mass, more preferably greater than 10 parts by mass, further preferably greater than 15 parts by mass, particularly preferably greater than 20 parts by mass, from the viewpoint of processability. Moreover, it is preferably less than 100 parts by mass, more preferably less than 80 parts by mass, further preferably less than 60 parts by mass, from the viewpoints of abrasion resistance and rubber hardness.

(Liquid rubber)

The rubber composition of the present invention preferably comprises a liquid rubber. The liquid rubber is not particularly limited as long as it is a polymer in a liquid state at a normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably greater than 1 part by mass, more preferably greater than 5 parts by mass, further preferably greater than 10 parts by mass, further preferably greater than 15 parts by mass, particularly preferably 20 parts by mass or more. Moreover, the content of the liquid rubber is preferably less than 60 parts by mass, more preferably less than 50 parts by mass, further preferably less than 40 parts by mass.

(Ester-based plasticizing agent)

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. Among them, the dioctyl sebacate (DOS) is appropriately used. These ester-based plasticizing agents may be used alone, or two or more thereof may be used in combination.

A content of the ester-based plasticizing agent when compounded based on 100 parts by mass of the rubber component is preferably greater than 1 part by mass, more preferably greater than 3 parts by mass, further preferably 5 parts by mass or more, from the viewpoint of the effects of the present invention. Moreover, it is preferably less than 50 parts by mass, more preferably less than 40 parts by mass, further preferably less than 30 parts by mass, from the viewpoint of peak grip performance.

A total content of the resin component and the ester-based plasticizing agent based on 100 parts by mass of the rubber component is preferably greater than 5 parts by mass, more preferably greater than 10 parts by mass, further preferably greater than 14 parts by mass, further preferably greater than 19 parts by mass, particularly preferably greater than 24 parts by mass. Moreover, the total content is preferably less than 80 parts by mass, more preferably less than 70 parts by mass, further preferably less than 60 parts by mass, particularly preferably less than 66 parts by mass. When the total content of the resin component and the ester-based plasticizing agent is within the above-described ranges, peak grip performance can be improved.

A content of the softening agent based on 100 parts by mass of the rubber component (a total amount of all of a plurality of softening agents when used in combination) is preferably greater than 40 parts by mass, more preferably greater than 50 parts by mass, further preferably greater than 60 parts by mass, particularly preferably 65 parts by mass or more, from the viewpoint of peak grip performance. Moreover, it is preferably less than 140 parts by mass, more preferably less than 120 parts by mass, further preferably less than 101 parts by mass, particularly preferably less than 91 parts by mass, from the viewpoint of processability.

<Other compounding agents>

The rubber composition according to the present invention can appropriately comprise compounding agents conventionally and commonly used in the tire industry, such as, for example, wax, processing aid, an antioxidant, stearic acid, zinc oxide, a cross-linking agent, and a vulcanization accelerator, in addition to the above-described components.

A content of wax when compounded based on 100 parts by mass of the rubber component is preferably greater than 0.5 parts by mass, more preferably greater than 1.0 part by mass, further preferably greater than 1.5 parts by mass, from the viewpoint of weather resistance of a rubber. Moreover, it is preferably less than 10 parts by mass, more preferably less than 7.0 parts by mass, further preferably less than 5.0 parts by mass, from the viewpoint of prevention of whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably greater than 0.5 parts by mass, more preferably greater than 1.0 part by mass, further preferably greater than 1.5 parts by mass, from the viewpoint of ozone crack resistance of a rubber. Moreover, it is preferably less than 10 parts by mass, more preferably less than 8.0 parts by mass, further preferably less than 5.0 parts by mass, from the viewpoints of abrasion resistance and wet grip performance.

A content of stearic acid when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of vulcanization rate.

A content of zinc oxide when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of abrasion resistance.

Sulfur is appropriately used as a cross-linking agent. As sulfur, a powdered sulfur, an oil processing sulfur, a precipitated sulfur, a colloidal sulfur, an insoluble sulfur, a highly dispersible sulfur, and the like can be used.

A content of sulfur when compounded based on 100 parts by mass of the rubber component is preferably greater than 0.1 parts by mass, more preferably greater than 0.3 parts by mass, further preferably 0.5 parts by mass or more, particularly preferably greater than 0.5 parts by mass, from the viewpoint of securing a sufficient vulcanization reaction. Moreover, it is preferably less than 5.0 parts by mass, more preferably less than 4.0 parts by mass, further preferably less than 3.0 parts by mass, particularly preferably less than 2.6 parts by mass, from the viewpoint of prevention of deterioration. Besides, a content of the vulcanizing agent in a case where an oil-containing sulfur is used as the cross-linking agent shall be a total content of pure sulfur contained in the oil-containing sulfur.

As cross-linking agents other than sulfur, known organic cross-linking agents can also be used. When the organic cross-linking agent is compounded in the rubber composition, a distance between crosslinking points becomes longer as compared with crosslinking with sulfur, which allows for occurrence of much energy loss, and good peak grip performance is obtained.

The organic cross-linking agent is not particularly limited as long as it can form a cross-linking chain other than a polysulfide bond, examples of which include, for example, an alkylphenol-sulfur chloride condensate, sodium hexamethylene-1,6-bisthiosulfate dihydrate, 1,6-bis(N,N'-dibenzylthiocarbamoyl dithio)hexane, dicumyl peroxide, etc., and 1,6-bis(N,N'-dibenzylthiocarbamoyl dithio)hexane is preferable. Those commercially available from Taoka Chemical Co., Ltd., LANXESS, Flexsys, etc. can be used as these organic cross-linking agents.

A content of the organic cross-linking agent when compounded based on 100 parts by mass of the rubber component is preferably greater than 1 part by mass, more preferably greater than 2 parts by mass, further preferably greater than 3 parts by mass. Moreover, this content is preferably less than 10 parts by mass, more preferably less than 8 parts by mass, further preferably less than 6 parts by mass.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination. Among them, one or more vulcanization accelerators selected from a group consisting of the sulfenamide-based vulcanization accelerator, the thiazole-based vulcanization accelerator, and the guanidine-based vulcanization accelerator are preferable from the viewpoint that desired effects can be obtained more appropriately.

Examples of the sulfenamide-based vulcanization accelerator include, for example, N-t-butyl-2-benzothiazole sulfenamide (TBBS), N-cyclohexyl-2-benzothiazolyl sulfenamide (CBS), N,N-dicyclohexyl-2-benzothiazolyl sulfenamide (DCBS), and the like. Among them, the TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl) mercaptobenzothiazole, 2-(2,6-diethyl-4-morpholinothio) benzothiazole, and the like. Among them, the MBTS and MBT are preferable, and the MBTS is more preferable.

Examples of the thiuram-based vulcanization accelerator include, for example, tetrakis(2-ethylhexyl) thiuram disulfide (TOT-N), tetramethylthiuram disulfide (TMTD), tetraethylthiuram disulfide, tetramethylthiuram monosulfide (TMTM), dipentamethylenethiuram disulfide, dipentamethylenethiuram tetrasulfide, and the like. Among them, the TOT-N and TMTD are preferable, and the TOT-N is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, the DPG is preferable.

Examples of the dithiocarbamic acid salt-based vulcanization accelerator include, for example, piperidinium pentamethylenedithiocarbamate (PPDC), zinc dimethyldithiocarbamate (ZnMDC), zinc diethyldithiocarbamate (ZnEDC), zinc dibutyldithiocarbamate (ZnBCD), zinc dibenzyldithiocarbamate (ZDBzC), zinc N-ethyl-N-phenyl dithiocarbamate (ZnEPDC), zinc N-pentamethylene dithiocarbamate (ZnPDC), sodium dibutyldithiocarbamate (NaBCD), copper dimethyldithiocarbamate (CuMDC), ferric dimethyldithiocarbamate (FeMDC), tellurium diethyldithiocarbamate (TeEDC), and the like. Among them, the ZnBDC and ZDBzC are preferable.

Examples of the caprolactam disulfide include, for example, N,N'-di($\delta$-caprolactam) disulfide, N,N'-di($\epsilon$-caprolactam) disulfide, N,N'-di(3-methyl-$\delta$-caprolactam) disulfide, N,N'-di(3-ethyl-$\epsilon$-caprolactam) disulfide, N,N'-di($\delta$-methoxy-$\epsilon$-caprolactam) disulfide, N,N'-di(3-chlor-$\epsilon$-caprolactam) disulfide, N,N'-di($\delta$-nitro-$\epsilon$-caprolactam) disulfide, N,N'-di(3-amino-$\epsilon$-caprolactam) disulfide, and the like. Among them, N,N'-di($\epsilon$-caprolactam) disulfide is preferable.

A content of the vulcanization accelerator when compounded based on 100 parts by mass of the rubber component (a total amount of all of a plurality of vulcanization accelerators when used in combination) is preferably greater than 2.0 parts by mass, more preferably greater than 2.5 parts by mass. Moreover, the content of the vulcanization accelerator based on 100 parts by mass of the rubber component is preferably less than 10 parts by mass, more preferably less than 7 parts by mass. When the content of the vulcanization accelerator is within the above-described ranges, breaking strength and elongation tend to be secured.

The rubber composition according to the present invention can be produced by a known method. For example, it can be produced by kneading the respective above-described components with a rubber kneading machine such as an open roll and a sealed type kneader (a Banbury mixer, a kneader, and the like).

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire of the present invention comprising the tread composed of the rubber composition can be produced by a usual method. That is, the tire can be produced by extruding an unvulcanized rubber composition, in which the above-described components are compounded for a rubber component as appropriate, into a shape of at least one rubber layer constituting the tread, attaching it together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

<Application>

The tire of the present invention can be used both as a general-purpose tire such as a tire for a passenger car, a tire for a truck/bus, or a motorcycle tire and as a racing tire. Besides, the tire for a passenger car refers to a tire that is presupposed to be mounted to a vehicle running with four wheels and that has a maximum load capacity of 1000 kg or less. Moreover, the tire of the present invention can be used as an all-season tire, a summer tire, or a winter tire such as a studless tire.

EXAMPLES

Hereinafter, examples considered to be preferable in implementing the present invention (Examples) will be described, though the scope of the present invention is not limited to these Examples only.

Assuming tires comprising treads composed of rubber compositions obtained in accordance with Tables 1 to 4, using various chemicals described below, results calculated based on evaluation methods described below are shown in Tables 1 to 4.

Various chemicals used in Examples and Comparative examples are collectively shown below.

SBR 1: HP755 manufactured by Asahi Kasei Corporation (S-SBR, styrene content: 39.5% by mass, vinyl content: 38.2 mol%, comprising 37.5 parts by mass of an oil content based on 100 parts by weight of a rubber content)

SBR2: JSR1723 manufactured by JSR Corporation (E-SBR, styrene content: 24% by mass, vinyl content: 17 mol%, Mw: 480,000, comprising 37.5 parts by mass of an oil content based on 100 parts by weight of a rubber content)

SBR3: HPR840 manufactured by JSR Corporation (S-SBR, styrene content: 10% by mass, vinyl content: 42 mol%, Mw: 190,000, non-oil extended product)

NR: TSR 20

BR: Ubepol BR (Registered Trademark) 150B manufactured by Ube Industries, Ltd. (cis content: 97 mol%)

Carbon black 1: Seast 9 manufactured by Tokai Carbon Co., Ltd., ($N_2SA$: 142 $m^2$/g, DBP oil absorption amount: 115 mL/100 g, average primary particle size: 19 nm)

Carbon black 2: SHOW BLACK N330 manufactured by Cabot Japan K.K., ($N_2SA$: 75 $m^2$/g, DBP oil absorption amount: 102 mL/100 g, average primary particle size: 28 nm)

Silica 1: Ultrasil (Registered Trademark) VN3 manufactured by Evonik Degussa GmbH ($N_2SA$: 175 $m^2$/g, average primary particle size: 17 nm)

Silica 2: Ultrasil 9100GR manufactured by Evonik Degussa GmbH ($N_2SA$: 230 $m^2$/g, average particle diameter: 15 nm)

Silane coupling agent: Si69 manufactured by Evonik Degussa GmbH (bis(3-triethoxysilylpropyl)tetrasulfide)

Resin component 1: Sylvatraxx 4401 manufactured by Kraton Corporation (copolymer of $\alpha$-methylstyrene and styrene, softening point: 85°C)

Resin component 2: Koresin manufactured by BASF (p-t-butylphenol acetylene resin (condensation resin of p-t-butylphenol and acetylene), softening point: 145°C)

Ester-based plasticizing agent: DOS manufactured by DAIHACHI CHEMICAL INDUSTRY CO., LTD. (bis(2-ethylhexyl) sebacate)

Liquid rubber 1: L-SBR-820 manufactured by Kuraray Co., Ltd. (Liquid SBR)

Liquid rubber 2: RICON 134 manufactured by Cray Valley (liquid BR)

Oil: VivaTec 500 manufactured by H&R Group (TDAE oil)

Zinc oxide: Zinc oxide No. 2 manufactured by Mitsui Mining & Smelting Co., Ltd.

Stearic acid: Bead stearic acid "CAMELLIA" manufactured by NOF CORPORATION

Antioxidant: Antigen 6C manufactured by Sumitomo Chemical Co., Ltd. (N-(1,3-dimethylbutyl)-N'-phenyl-p-phenylenediamine)

Wax: Sunnoc N manufactured by Ouchi Shinko Chemical Industry Co., Ltd.

Sulfur: Powdered sulfur manufactured by Karuizawa Sulfur Co, Ltd.

Vulcanization accelerator 1: Nocceler DM-P manufactured by Ouchi Shinko Chemical Industry Co., Ltd. (di-2-benzothiazolyl disulfide)

Vulcanization accelerator 2: Sanceler NS-G manufactured by Sanshin Chemical Industry Co., Ltd. (N-(t-butyl)-2-benzothiazole sulfenamide)

Vulcanization accelerator 3: SOXINOL DG manufactured by Sumitomo Chemical Co., Ltd. (1,3-diphenylguanidine)

(Examples and Comparative examples)

According to the compounding formulations shown in Tables 1 to 4, using a 1.7 L closed Banbury mixer, chemicals other than sulfur and a vulcanization accelerator are kneaded for 1 to 10 minutes until the temperature reaches a discharge temperature of 150 to 160°C, to obtain a kneaded product. Next, using a twin-screw open roll, sulfur and the vulcanization accelerator are added to the obtained kneaded product, and the mixture is kneaded for 4 minutes until the temperature reaches 105°C, to obtain an unvulcanized rubber composition. The obtained unvulcanized rubber composition is extruded into a shape of each of treads having land ratios R shown in Tables 1 to 4 using an extruder equipped with a mouthpiece having a predetermined shape and attached together with other tire members to produce an unvulcanized tire, and the unvulcanized tire is press-vulcanized under a condition of a temperature at 170°C for 12 minutes, thereby obtaining each test tire (size: 205/65R15, rim: 15×7.0JJ, internal pressure: 230 kPa, for racing tires in Tables 1 and 2, and size: 215/60R16, rim: 16×6.5JJ, internal pressure: 230 kPa, for tires for a passenger car in Tables 3 and 4).

A tire tread part for test of each of racing tires of Tables 1 and 2 is provided with a block and a recess, and a ratio between a volume of the block and a volume of the recess is set to 0.14.

< Measurement of $Tg_1$ of rubber composition>

Each rubber test piece subjected to vulcanization is prepared by cutting out the rubber test piece having a length of 20 mm, a width of 4 mm, and a thickness of 1 mm from a tread part of each test tire such that a tire circumferential direction becomes a long side and a tire radial direction becomes a thickness direction. A temperature distribution curve of a tan $\delta$ is measured using EPLEXOR series manufactured by gabo Systemtechnik GmbH under a condition of a frequency of 10 Hz, an initial strain of 10%, an amplitude of ±0.5%, and a temperature rising rate of 2°C/min. Additionally, a tan $\delta$ peak temperature corresponding to the greatest value of the tan $\delta$ in the measured temperature distribution curve is defined as a glass transition point before acetone extraction ($Tg_1$).

<Measurement of $Tg_2$ of rubber composition>

Each rubber test piece, in which $Tg_1$ is measured, is immersed in acetone for 72 hours, thereby extracting a soluble component. For each rubber test piece after the extraction, a temperature distribution curve of a tan $\delta$ is measured using EPLEXOR series manufactured by gabo Systemtechnik GmbH under a condition of a frequency of 10 Hz, an initial strain of 10%, an amplitude of $\pm 0.5\%$, and a temperature rising rate of 2°C/min. Additionally, a tan $\delta$ peak temperature corresponding to the greatest value of tan $\delta$ in the measured temperature distribution curve is defined as a glass transition point after acetone extraction ($Tg_2$).

<Measurement of amount S of sulfur in rubber composition>

Each rubber test piece subjected to vulcanization is prepared by cutting out the rubber test piece having a length of 20 mm, a width of 4 mm, and a thickness of 1 mm from the tread part of each test tire such that the tire circumferential direction becomes a long side and the tire radial direction becomes a thickness direction. An amount S% by mass of sulfur in the test piece is calculated by the oxygen combustion flask method according to JIS K 6233.

<Measurement of rubber hardness>

A sample for measurement of hardness having a length of 20 mm, a width of 4 mm, and a thickness of 1 mm, which is cut out of the tread part of each test tire so that the tire circumferential direction becomes a long side and the tire radial direction becomes a thickness direction, is prepared. For the sample for measurement of hardness, a type A durometer is pressed against the sample from the tread part-grounding-surface side to measure hardness at 25°C in accordance with JIS K 6253.

<Measurement of 0°C tan $\delta$>

Each rubber test piece subjected to vulcanization is prepared by cutting out the rubber test piece having a length of 20 mm, a width of 4 mm, and a thickness of 1 mm from each rubber layer of the tread part of each test tire such that the tire circumferential direction becomes a long side and the tire radial direction becomes a thickness direction. For each rubber test piece, a loss tangent (tan $\delta$) is measured using EPLEXOR series manufactured by gabo Systemtechnik GmbH under a condition of a temperature at 0°C, a frequency of 10 Hz, an initial strain of 10%, and a dynamic strain of 2.5%.

<Measurement of 100°C tan $\delta$>

Each rubber test piece subjected to vulcanization is prepared by cutting out the rubber test piece having a length of 20 mm, a width of 4 mm, and a thickness of 1 mm from each rubber layer of the tread part of each test tire such that the tire circumferential direction becomes a long side and the tire radial direction becomes a thickness direction. For each rubber test piece, a loss tangent (tan $\delta$) is measured using EPLEXOR series manufactured by gabo Systemtechnik GmbH under a condition of a temperature at 100°C, a frequency of 10 Hz, an initial strain of 10%, and a dynamic strain of 2.5%.

<Measurement of 30°C tan $\delta$ and 30°C $E^*$>

Each rubber test piece subjected to vulcanization is prepared by cutting out the rubber test piece having a length of 20 mm, a width of 4 mm, and a thickness of 1 mm from each rubber layer of the tread part of each test tire such that the tire circumferential direction becomes a long side and the tire radial direction becomes a thickness direction. For each rubber test piece, a tan $\delta$ and a complex elastic module ($E^*_{30}$) are measured using EPLEXOR series manufactured by gabo Systemtechnik GmbH under a condition of a temperature at 30°C, a frequency of 10 Hz, an initial strain of 5%, and a dynamic strain of 1%.

<Peak grip performance >

Test tires were mounted on all wheels of a domestic FR passenger car with a displacement of 2000 cc, and the FR passenger vehicle was run 10 laps on a test course with a dry asphalt road surface. Sensory evaluations on stability of control in steering at the time of the best lap, in this case, are performed by test drivers. The evaluations are performed using integer values of 1 to 5 points, and a total score of scores obtained by the 20 test drivers is calculated based on evaluation criteria that the higher the score is, the more excellent the stability of control in steering is. A total score of reference Comparative examples (Comparative example 1 in Tables 1 and 2, Comparative example 10 in Tables 3 and 4) is converted into a reference value (100), and an evaluation result for each test tire is indicated as an index in proportion to the total score. The results show that the larger the value is, the higher the grip performance during running is, and good peak grip performance during highspeed running is obtained.

Table 1 (Racing tire)

| | Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| SBR1 (Solid rubber content) | - | - | - | - | - | - | 41.25 (30) | - | - |
| SBR2 (Solid rubber content) | 137.50 (100) | 137.50 (100) | 137.50 (100) | 137.50 (100) | 137.50 (100) | - | 96.25 (70) | 137.50 (100) | 96.25 (70) |
| SBR3 | - | - | - | - | - | 100 | - | - | |
| NR | - | - | - | - | - | - | - | - | 30 |
| Carbon black 1 | 120 | 120 | 120 | 120 | 120 | 120 | 120 | 120 | 120 |
| Resin component 1 | 60 | 30 | - | - | - | - | - | - | - |
| Resin component 2 | - | - | 30 | 30 | 30 | 30 | 40 | 30 | 30 |
| Ester-based plasticizing agent | 5.0 | 5.0 | 5.0 | 5.0 | 5.0 | 5.0 | 5.0 | 5.0 | 5.0 |
| Liquid rubber 1 | - | - | - | - | 20 | 20 | 20 | 20 | 20 |
| Oil | 5 | 30 | 30 | 30 | 10 | 40 | 10 | 10 | 20 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Antioxidant | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 |
| Sulfur | 1.5 | 1.5 | 1.5 | 0.5 | 0.5 | 0.5 | 0.5 | 0.5 | 0.5 |
| Vulcanization accelerator 1 | 5.0 | 5.0 | 5.0 | 5.0 | 5.0 | 5.0 | 5.0 | 5.0 | 5.0 |
| Vulcanization accelerator 2 | 1.0 | 1.0 | 1.0 | 1.0 | 1.0 | 1.0 | 1.0 | 1.0 | 1.0 |
| $Tg_2$ (°C) | -56 | -56 | -56 | -56 | -56 | -62 | -46 | -56 | -67 |
| Land ratio R (%) | 70 | 70 | 70 | 70 | 70 | 70 | 55 | 55 | 70 |
| Left side of inequality (1) | 1.14 | 1.14 | 1.14 | 1.14 | 1.14 | 1.25 | 1.13 | 1.45 | 1.34 |
| Total amount of fillers (part by mass) | 120 | 120 | 120 | 120 | 120 | 120 | 120 | 120 | 120 |
| $Tg_1$ (°C) | -13 | -21 | -12 | -12 | -12 | -22 | -18 | -12 | -21 |
| Amount of sulfur (S) (% by mass) | 1.2 | 1.2 | 1.2 | 0.9 | 0.9 | 0.9 | 0.8 | 0.9 | 0.9 |
| Rubber hardness | 65 | 63 | 70 | 67 | 68 | 63 | 69 | 68 | 69 |
| 0°C tan δ | 0.67 | 0.59 | 0.56 | 0.54 | 0.55 | 0.47 | 0.96 | 0.55 | 0.45 |
| 30°C tan δ | 0.48 | 0.45 | 0.48 | 0.52 | 0.50 | 0.42 | 0.54 | 0.50 | 0.39 |
| 100°C tan δ | 0.30 | 0.30 | 0.33 | 0.39 | 0.39 | 0.36 | 0.33 | 0.38 | 0.33 |
| $E^*_{30}$ (MPa) | 25 | 24 | 27 | 25 | 23 | 19 | 7 | 23 | 19 |
| 100°C tan δ × R | 21 | 21 | 23 | 27 | 27 | 25 | 20 | 21 | 23 |

(continued)

| | Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| $Tg_2 \times S$ | -67.2 | -67.2 | -67.2 | -50.4 | -50.4 | -55.8 | -36.8 | -50.4 | -60.3 |
| Peak grip performance index | 116 | 124 | 132 | 140 | 146 | 148 | 128 | 154 | 142 |

Table 2 (Racing tire)

| | Comparative example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| SBR1 (Solid rubber content) | 137.50 (100) | 55.00 (40) | 137.50 (100) | - | 55.00 (40) | 41.25 (30) | 41.25 (30) | 41.25 (30) | 41.25 (30) |
| SBR2 (Solid rubber content) | - | 82.50 (60) | - | 137.50 (100) | 82.50 (60) | 96.25 (70) | 96.25 (70) | 96.25 (70) | 96.25 (70) |
| SBR3 | - | - | - | - | - | - | - | - | - |
| Carbon black 1 | 80 | 80 | 120 | 80 | 120 | 120 | 120 | 120 | 120 |
| Resin component 1 | 30 | 40 | 30 | 60 | 40 | 50 | - | - | - |
| Resin component 2 | - | - | - | - | - | - | 40 | 40 | 40 |
| Ester-based plasticizing agent | 5.0 | 5.0 | 5.0 | 5.0 | 5.0 | 5.0 | 5.0 | 5.0 | 5.0 |
| Liquid rubber 1 | - | - | - | - | - | - | - | - | 20 |
| Oil | 20 | 10 | 10 | 5.0 | 10 | 10 | 10 | 10 | 10 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Antioxidant | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 0.5 | 0.5 |
| Vulcanization accelerator 1 | 2.0 | 2.0 | 2.0 | 2.0 | 2.0 | 2.0 | 2.0 | 5.0 | 5.0 |
| Vulcanization accelerator 2 | 1.0 | 1.0 | 1.0 | 1.0 | 1.0 | 1.0 | 1.0 | 1.0 | 1.0 |
| $Tg_2$ (°C) | -20 | -42 | -20 | -57 | -41 | -46 | -47 | -46 | -46 |
| Land ratio R (%) | 55 | 55 | 55 | 70 | 55 | 70 | 70 | 70 | 70 |
| Left side of inequality (1) | 0.64 | 1.14 | 0.64 | 1.16 | 1.11 | 0.96 | 0.98 | 0.96 | 0.96 |
| Total amount of fillers (part by mass) | 80 | 80 | 120 | 80 | 120 | 120 | 120 | 120 | 120 |
| $Tg_1$ (°C) | -3 | -11 | -3 | -11 | -10 | -13 | -19 | -19 | -18 |
| Amount of sulfur (S) (% by mass) | 1.2 | 1.2 | 1.2 | 1.2 | 1.2 | 1.2 | 1.2 | 0.8 | 0.8 |
| Rubber hardness | 51 | 50 | 68 | 47 | 65 | 62 | 72 | 73 | 67 |
| 0°C tan $\delta$ | 1.20 | 1.00 | 1.10 | 1.00 | 1.00 | 1.00 | 0.90 | 0.91 | 0.93 |
| 30°C tan $\delta$ | 0.57 | 0.56 | 0.54 | 0.56 | 0.56 | 0.58 | 0.56 | 0.57 | 0.55 |

(continued)

| | Comparative example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| 100°C tan $\delta$ | 0.25 | 0.25 | 0.25 | 0.26 | 0.25 | 0.26 | 0.27 | 0.33 | 0.31 |
| E*$_{30}$ (MPa) | 11 | 13 | 14 | 13 | 13 | 12 | 13 | 12 | 9 |
| 100°C tan $\delta \times$ R | 14 | 14 | 14 | 18 | 14 | 18 | 19 | 23 | 22 |
| Tg$_2 \times$ S | -24.0 | -50.4 | -24.0 | -68.4 | -49.2 | -55.2 | -56.2 | -36.8 | -36.8 |
| Peak grip performance index | 100 | 78 | 80 | 82 | 88 | 90 | 94 | 96 | 98 |

Table 3 (Tire for passenger car)

| | Example | | | | | | | |
|---|---|---|---|---|---|---|---|---|
| | 10 | 11 | 12 | 13 | 14 | 15 | 16 | 17 |
| Compounding amount (part by mass) | | | | | | | | |
| SBR1 (Solid rubber content) | - | - | - | - | - | - | - | - |
| SBR2 (Solid rubber content) | 137.50 (100) | 137.50 (100) | 137.50 (100) | 137.50 (100) | 137.50 (100) | 82.50 (60) | 55.00 (40) | - |
| SBR3 | - | - | - | - | - | - | - | 40 |
| NR | - | - | - | - | - | 10 | 20 | 20 |
| BR | - | - | - | - | - | 30 | 40 | 40 |
| Carbon black 2 | 10 | 10 | 10 | 10 | 10 | 10 | 10 | 10 |
| Silica 1 | 120 | 120 | 120 | 120 | 120 | 120 | 120 | 120 |
| Silica 2 | - | - | - | - | - | - | - | - |
| Silane coupling agent | 12.0 | 12.0 | 12.0 | 12.0 | 12.0 | 12.0 | 12.0 | 12.0 |
| Resin component 1 | 50 | 35 | - | - | - | - | - | - |
| Resin component 2 | - | - | 35 | 35 | 35 | 35 | 35 | 35 |
| Ester-based plasticizing agent | 5.0 | 5.0 | 5.0 | 5.0 | 5.0 | 5.0 | 5.0 | 5.0 |
| Liquid rubber 1 | - | - | - | - | 20 | 20 | 20 | 20 |
| Liquid rubber 2 | - | - | - | - | - | - | - | - |
| Oil | 10 | 25 | 25 | 25 | 5 | 20 | 27.5 | 27.5 |
| Zinc oxide | 3.0 | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 | 2.0 |
| Antioxidant | 4.0 | 4.0 | 4.0 | 4.0 | 4.0 | 4.0 | 4.0 | 4.0 |
| Wax | 3.0 | 3.0 | 3.0 | 3.0 | 3.0 | 3.0 | 3.0 | 3.0 |
| Sulfur | 1.5 | 1.5 | 1.5 | 0.7 | 0.7 | 0.7 | 0.7 | 0.7 |
| Vulcanization accelerator 1 | 2.0 | 2.0 | 2.0 | 4.0 | 4.0 | 4.0 | 4.0 | 4.0 |
| Vulcanization accelerator 2 | 1.0 | 1.0 | 1.0 | 1.0 | 1.0 | 1.0 | 1.0 | 1.0 |
| Vulcanization accelerator 3 | 3.0 | 3.0 | 3.0 | 3.0 | 3.0 | 3.0 | 3.0 | 3.0 |
| Tg$_2$ (°C) | -54 | -56 | -55 | -56 | -54 | -67 | -74 | -81 |
| Land ratio R (%) | 70 | 70 | 70 | 70 | 70 | 70 | 70 | 70 |
| Left side of inequality (1) | 1.11 | 1.14 | 1.13 | 1.14 | 1.11 | 1.34 | 1.46 | 1.59 |

(continued)

| | Example | | | | | | | |
|---|---|---|---|---|---|---|---|---|
| | 10 | 11 | 12 | 13 | 14 | 15 | 16 | 17 |
| Compounding amount (part by mass) | | | | | | | | |
| Total amount of fillers (part by mass) | 130 | 130 | 130 | 130 | 130 | 130 | 130 | 130 |
| $Tg_1$ (°C) | -12 | -19 | -20 | -20 | -21 | -33 | -42 | -49 |
| Amount of sulfur (S) (% by mass) | 1.2 | 1.2 | 1.2 | 0.9 | 0.9 | 0.9 | 0.9 | 0.9 |
| Rubber hardness | 67 | 66 | 74 | 74 | 75 | 74 | 73 | 72 |
| 0°C tan $\delta$ | 0.87 | 0.74 | 0.73 | 0.71 | 0.71 | 0.60 | 0.51 | 0.45 |
| 30°C tan $\delta$ | 0.41 | 0.40 | 0.40 | 0.40 | 0.40 | 0.34 | 0.29 | 0.26 |
| 100°C tan $\delta$ | 0.10 | 0.10 | 0.13 | 0.16 | 0.16 | 0.13 | 0.10 | 0.10 |
| $E^{*}_{30}$ (MPa) | 10 | 10 | 10 | 10 | 9 | 7 | 5 | 4 |
| 100°C tan $\delta \times R$ | 7 | 7 | 9 | 11 | 11 | 9 | 7 | 7 |
| $Tg_2 \times S$ | -64.8 | -67.2 | -66.0 | -50.4 | -48.6 | -60.3 | -66.6 | -72.9 |
| Peak grip performance index | 118 | 128 | 134 | 144 | 150 | 152 | 150 | 158 |

| | Example | | | | | | |
|---|---|---|---|---|---|---|---|
| | 18 | 19 | 20 | 21 | 22 | 23 | 24 |
| Compounding amount (part by mass) | | | | | | | |
| SBR1 (Solid rubber content) | - | - | 41.25 (30) | - | - | - | - |
| SBR2 (Solid rubber content) | 55.00 (40) | 55.00 (40) | 96.25 (70) | 55.00 (40) | 55.00 (40) | 82.50 (60) | 82.50 (60) |
| SBR3 | - | - | - | - | - | - | - |
| NR | 20 | 20 | - | 20 | 20 | 10 | - |
| BR | 40 | 40 | - | 40 | 40 | 30 | 40 |
| Carbon black 2 | - | 40 | 10 | 10 | 10 | 10 | 10 |
| Silica 1 | 130 | 80 | 120 | 120 | - | 120 | 120 |
| Silica 2 | - | - | - | - | 120 | - | - |
| Silane coupling agent | 13.0 | 8.0 | 12.0 | 12.0 | 12.0 | 12.0 | 12.0 |
| Resin component 1 | - | - | - | - | - | - | - |
| Resin component 2 | 35 | 35 | 30 | 35 | 35 | 35 | 35 |
| Ester-based plasticizing agent | 5.0 | 5.0 | 5.0 | 5.0 | 5.0 | 5.0 | 5.0 |
| Liquid rubber 1 | 20 | 20 | 20 | - | 20 | 20 | 20 |
| Liquid rubber 2 | - | - | - | 20 | - | - | - |
| Oil | 27.5 | 27.5 | 10 | 27.5 | 27.5 | 20 | 20 |
| Zinc oxide | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Antioxidant | 4.0 | 4.0 | 4.0 | 4.0 | 4.0 | 4.0 | 4.0 |
| Wax | 3.0 | 3.0 | 3.0 | 3.0 | 3.0 | 3.0 | 3.0 |
| Sulfur | 0.7 | 0.7 | 0.7 | 0.7 | 0.7 | 0.7 | 0.7 |
| Vulcanization accelerator 1 | 4.0 | 4.0 | 4.0 | 4.0 | 4.0 | 4.0 | 4.0 |
| Vulcanization accelerator 2 | 1.0 | 1.0 | 1.0 | 1.0 | 1.0 | 1.0 | 1.0 |

(continued)

| | Example | | | | | | |
|---|---|---|---|---|---|---|---|
| | 18 | 19 | 20 | 21 | 22 | 23 | 24 |
| Compounding amount (part by mass) | | | | | | | |
| Vulcanization accelerator 3 | 3.0 | 3.0 | 3.0 | 3.0 | 3.0 | 3.0 | 3.0 |
| $Tg_2$ (°C) | -74 | -74 | -46 | -74 | -74 | -67 | -67 |
| Land ratio R (%) | 70 | 70 | 65 | 70 | 70 | 55 | 70 |
| Left side of inequality (1) | 1.46 | 1.46 | 1.04 | 1.46 | 1.46 | 1.70 | 1.34 |
| Total amount of fillers (part by mass) | 130 | 120 | 130 | 120 | 130 | 130 | 130 |
| $Tg_1$ (°C) | -35 | -42 | -13 | -48 | -41 | -33 | -37 |
| Amount of sulfur (S) (% by mass) | 0.9 | 0.9 | 0.9 | 0.9 | 0.9 | 0.9 | 0.9 |
| Rubber hardness | 72 | 68 | 72 | 67 | 69 | 66 | 67 |
| 0°C tan $\delta$ | 0.62 | 0.54 | 0.81 | 0.43 | 0.49 | 0.60 | 0.56 |
| 30°C tan $\delta$ | 0.26 | 0.31 | 0.39 | 0.25 | 0.27 | 0.34 | 0.31 |
| 100°C tan $\delta$ | 0.11 | 0.10 | 0.15 | 0.09 | 0.09 | 0.16 | 0.11 |
| $E^*_{30}$ (MPa) | 5 | 5 | 8 | 4 | 7 | 7 | 6 |
| 100°C tan $\delta \times$ R | 8 | 7 | 10 | 6 | 6 | 9 | 8 |
| $Tg_2 \times$ S | -66.6 | -66.6 | -41.4 | -66.6 | -66.6 | -60.3 | -60.3 |
| Peak grip performance index | 154 | 154 | 104 | 142 | 156 | 160 | 138 |

Table 4 (Tire for passenger car)

| | Comparative example | | | | | | | | |
|---|---|---|---|---|---|---|---|---|---|
| | 10 | 11 | 12 | 13 | 14 | 15 | 16 | 17 | 18 |
| Compounding amount (part by mass) | | | | | | | | | |
| SBR1 (Solid rubber content) | 37.5 (100) | 55.00 (40) | 137.50 (100) | - | 55.00 (40) | 41.25 (30) | 41.25 (30) | 41.25 (30) | 41.25 (30) |
| SBR2 (Solid rubber content) | - | 82.50 (60) | - | 137.5 (100) | 82.50 (60) | 96.25 (70) | 96.25 (70) | 96.25 (70) | 96.25 (70) |
| SBR3 | - | - | - | - | - | - | - | - | - |
| NR | - | - | - | - | - | - | - | - | - |
| BR | - | - | - | - | - | - | - | - | - |
| Carbon black 2 | 10 | 10 | 10 | 10 | 10 | 10 | 10 | 10 | 10 |
| Silica 1 | 90 | 90 | 120 | 90 | 120 | 120 | 120 | 120 | 120 |
| Silane coupling agent | 9.0 | 9.0 | 12.0 | 9.0 | 12.0 | 12.0 | 12.0 | 12.0 | 12.0 |
| Resin component 1 | 20 | 35 | 20 | 50 | 35 | 30 | - | - | - |
| Resin component 2 | - | - | - | - | - | - | 30 | 30 | 30 |
| Ester-based plasticizing agent | 5.0 | 5.0 | 5.0 | 5.0 | 5.0 | 5.0 | 5.0 | 5.0 | 5.0 |
| Liquid rubber 1 | - | - | - | - | - | - | - | - | 20 |
| Liquid rubber 2 | - | - | - | - | - | - | - | - | - |
| Oil | 10 | 20 | 10 | 10 | 30 | 30 | 30 | 30 | 10 |
| Zinc oxide | 3.0 | 3.0 | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 | 2.0 | 2.0 |

(continued)

| | Comparative example | | | | | | | | |
|---|---|---|---|---|---|---|---|---|---|
| | 10 | 11 | 12 | 13 | 14 | 15 | 16 | 17 | 18 |
| Compounding amount (part by mass) | | | | | | | | | |
| Antioxidant | 4.0 | 4.0 | 4.0 | 4.0 | 4.0 | 4.0 | 4.0 | 4.0 | 4.0 |
| Wax | 3.0 | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 0.7 | 0.7 |
| Vulcanization accelerator 1 | 2.0 | 2.0 | 2.0 | 2.0 | 2.0 | 2.0 | 2.0 | 4.0 | 4.0 |
| Vulcanization accelerator 2 | 1.0 | 1.0 | 1.0 | 1.0 | 1.0 | 1.0 | 1.0 | 1.0 | 1.0 |
| Vulcanization accelerator 3 | 3.0 | 3.0 | 3.0 | 3.0 | 3.0 | 3.0 | 3.0 | 3.0 | 3.0 |
| $Tg_2$ (°C) | -24 | -40 | -24 | -55 | -41 | -47 | -47 | -46 | -46 |
| Land ratio R (%) | 50 | 55 | 55 | 70 | 55 | 70 | 70 | 70 | 70 |
| Left side of inequality (1) | 0.80 | 1.09 | 0.73 | 1.13 | 1.11 | 0.98 | 0.98 | 0.96 | 0.96 |
| Total amount of fillers (part by mass) | 100 | 100 | 130 | 100 | 130 | 130 | 130 | 130 | 130 |
| $Tg_1$ (°C) | -8 | -9 | -3 | -13 | -9 | -17 | -13 | -12 | -13 |
| Amount of sulfur (S) (% by mass) | 1.1 | 1.0 | 1.2 | 1.2 | 1.2 | 1.2 | 1.2 | 0.9 | 0.9 |
| Rubber hardness | 61 | 53 | 71 | 53 | 61 | 62 | 69 | 69 | 70 |
| 0°C tan $\delta$ | 1.00 | 0.95 | 1.00 | 0.90 | 1.00 | 0.80 | 0.80 | 0.80 | 0.82 |
| 30°C tan $\delta$ | 0.30 | 0.35 | 0.40 | 0.37 | 0.41 | 0.39 | 0.39 | 0.40 | 0.39 |
| 100°C tan $\delta$ | 0.04 | 0.05 | 0.05 | 0.06 | 0.05 | 0.10 | 0.13 | 0.16 | 0.16 |
| $E^*_{30}$ (MPa) | 8 | 5 | 15 | 7 | 9 | 9 | 9 | 9 | 8 |
| 100°C tan $\delta \times$ R | 2 | 3 | 3 | 4 | 3 | 7 | 9 | 11 | 11 |
| $Tg_2 \times$ S | -26.4 | -40.0 | -28.8 | -66.0 | -49.2 | -56.4 | -56.4 | -41.4 | -41.4 |
| Peak grip performance index | 100 | 76 | 80 | 82 | 86 | 88 | 92 | 96 | 98 |

<Embodiments>

The present invention is as defined in claim 1. Further beneficial embodiments are defined in pending dependent claims 2 - 19.

REFERENCE SIGNS LIST

| | |
|---|---|
| 1 | Tread surface |
| 2 | Center land part |
| 3 | Shoulder land part |
| 4. | Circumferential groove |
| 5, 6, 7, 8 | Width direction groove |
| 9 | Groove both ends of which communicate with circumferential grooves |
| 10 | Circumferential inclined groove |
| 11 | Width direction inclined groove |

| 12 | Block |
|----|-------|
| 13 | Recess |
| C | Tire circumferential direction |
| W | Tire width direction |
| CL | Tire center line |
| Te | Tread end |

It is an object of the present invention to provide a tire with improved peak grip performance. Provided is a tire comprising a tread part, wherein the tread part is composed of a rubber composition comprising a rubber component and fillers, wherein a total content of the fillers in the rubber composition based on 100 parts by mass of the rubber component is greater than 100 parts by mass, wherein a glass transition temperature $Tg_2$°C of the rubber composition after acetone extraction is lower than -45°C, and wherein, when a land ratio in a grounding surface of the tread part is defined as R%, $Tg_2$ and R satisfy an inequality, $(10 - 1.25\ Tg_2)/R > 1.00$.

**Claims**

1. A tire comprising a tread part,

    wherein the tread part is composed of a rubber composition comprising a rubber component and a filler,
    wherein the rubber composition comprises greater than 100 parts by mass of the filler based on 100 parts by mass of the rubber component,
    wherein a glass transition temperature $Tg_2$°C of the rubber composition after acetone extraction, as determined according to the description, is less than -45, and
    wherein, when a land ratio in a grounding surface of the tread part is defined as R(%), as determined according to the description, $Tg_2$ and R satisfy the following inequality (1).

$$(10 - 1.25\ Tg_2)/R > 1.00 \quad \cdots \quad (1)$$

2. The tire of claim 1, wherein a glass transition temperature $Tg_1$°C of the rubber composition before the acetone extraction is -15 or less.

3. The tire of claim 1 or 2, wherein an amount S% by mass of sulfur in the rubber component of the rubber composition is 0.95 or less.

4. The tire of any one of claims 1 to 3, wherein the rubber composition further comprises a liquid rubber.

5. The tire of any one of claims 1 to 4, wherein $Tg_2$°C is -60 or less.

6. The tire of any one of claims 1 to 5, wherein the rubber composition comprises greater than 5 parts by mass and less than 150 parts by mass of carbon black based on 100 parts by mass of the rubber component.

7. The tire of any one of claims 1 to 6, wherein the rubber composition comprises silica having an average primary particle size of 18 nm or less.

8. The tire of any one of claims 1 to 7, wherein the right side of the inequality (1) is 1.10.

9. The tire of any one of claims 1 to 8, wherein a rubber hardness of the rubber composition is greater than 62 and less than 75.

10. The tire of any one of claims 1 to 9, wherein a tan $\delta$ at 0°C (0°C tan $\delta$) of the rubber composition, as determined according to the description, is greater than 0.40.

11. The tire of any one of claims 1 to 10, wherein a tan $\delta$ at 30°C (30°C tan $\delta$) of the rubber composition is greater than 0.20.

12. The tire of any one of claims 1 to 11, wherein a complex elastic modulus at 30°C ($E^*_{30}$) of the rubber composition, as determined according to the description, is less than 30 MPa.

13. The tire of any one of claims 1 to 12, wherein a product of a 100°C tan $\delta$ at 100 °C (100°C tan $\delta$) and R of the rubber composition is 5.0 or more.

14. The tire of any one of claims 1 to 13, wherein the rubber composition comprises silica having an average primary particle size of 16 nm or less.

15. The tire of any one of claims 1 to 14, wherein the rubber composition comprises greater than 5 parts by mass of an ester-based plasticizing agent based on 100 parts by mass of the rubber component.

16. The tire of any one of claims 1 to 15, wherein the rubber composition comprises greater than 1 part by mass of an organic cross-linking agent based on 100 parts by mass of the rubber component.

17. The tire of any one of claims 1 to 16, wherein a product of $Tg_2$ of the rubber composition and S is -50 or less.

18. The tire of any one of claims 1 to 17, wherein the rubber composition further comprises a resin component having a softening point of 90°C or less.

19. The tire of any one of claims 1 to 18, wherein the tire is a racing tire.

**Patentansprüche**

1. Reifen umfassend ein Laufflächenteil,

   wobei der Laufflächenteil aus einer Gummizusammensetzung besteht, die eine Gummikomponente und einen Füllstoff umfasst,
   wobei die Gummizusammensetzung mehr als 100 Masseteile des Füllstoffs basierend auf 100 Masseteilen der Gummikomponente umfasst,
   wobei eine Glasübergangstemperatur $Tg_2$°C der Gummizusammensetzung nach Aceton-Extraktion, wie gemäß der Beschreibung bestimmt, weniger als -45 ist, und
   wobei, wenn ein Landverhältnis in einer Bodenfläche des Laufflächenteils als R(%) definiert ist, wie gemäß der Beschreibung bestimmt, $Tg_2$ und R die folgende Ungleichung (1) erfüllen.

$$(10 - 1{,}25\ Tg_2)/R > 1{,}00 \cdots (1)$$

2. Reifen nach Anspruch 1, wobei eine Glasübergangstemperatur $Tg_1$°C der Gummizusammensetzung vor der Aceton-Extraktion -15 oder weniger ist.

3. Reifen nach Anspruch 1 oder 2, wobei eine Menge S% nach Masse an Schwefel in der Gummikomponente der Gummizusammensetzung 0,95 oder weniger ist.

4. Reifen nach einem der Ansprüche 1 bis 3, wobei die Gummizusammensetzung ferner einen Flüssiggummi umfasst.

5. Reifen nach einem der Ansprüche 1 bis 4, wobei $Tg_2$°C -60 oder weniger ist.

6. Reifen nach einem der Ansprüche 1 bis 5, wobei die Gummizusammensetzung mehr als 5 Masseteile und weniger als 150 Masseteile Ruß basierend auf 100 Masseteilen der Gummikomponente umfasst.

7. Reifen nach einem der Ansprüche 1 bis 6, wobei die Kautschukzusammensetzung Siliciumdioxid mit einer durchschnittlichen Primärpartikelgröße von 18 nm oder weniger umfasst.

8. Reifen nach einem der Ansprüche 1 bis 7, wobei die rechte Seite der Ungleichung (1) 1,10 ist.

9. Reifen nach einem der Ansprüche 1 bis 8, wobei eine Gummihärte der Gummizusammensetzung größer als 62 und kleiner als 75 ist.

10. Reifen nach einem der Ansprüche 1 bis 9, wobei ein tan $\delta$ bei 0 °C (0 °C tan $\delta$) der Gummizusammensetzung, wie

gemäß der Beschreibung bestimmt, größer als 0,40 ist.

11. Reifen nach einem der Ansprüche 1 bis 10, wobei ein tan $\delta$ bei 30 °C (30 °C tan $\delta$) der Gummizusammensetzung größer als 0,20 ist.

12. Reifen nach einem der Ansprüche 1 bis 11, wobei ein komplexes Elastizitätsmodul bei 30 °C ($E^*_{30}$) der Gummizusammensetzung, wie gemäß der Beschreibung bestimmt, kleiner als 30 MPa ist.

13. Reifen nach einem der Ansprüche 1 bis 12, wobei ein Produkt aus einem 100 °C tan $\delta$ bei 100 °C (100 °C tan $\delta$) und R der Gummizusammensetzung 5,0 oder mehr ist.

14. Reifen nach einem der Ansprüche 1 bis 13, wobei die Gummizusammensetzung Siliciumdioxid mit einer durchschnittlichen Primärpartikelgröße von 16 nm oder weniger umfasst.

15. Reifen nach einem der Ansprüche 1 bis 14, wobei die Gummizusammensetzung mehr als 5 Masseteile eines Ester-basierten Weichmachers basierend auf 100 Masseteilen der Gummikomponente umfasst.

16. Reifen nach einem der Ansprüche 1 bis 15, wobei die Gummizusammensetzung mehr als 1 Masseteil eines organischen Vernetzungsmittels basierend auf 100 Masseteilen der Gummikomponente umfasst.

17. Reifen nach einem der Ansprüche 1 bis 16, wobei ein Produkt aus $Tg_2$ der Gummizusammensetzung und S -50 oder weniger ist.

18. Reifen nach einem der Ansprüche 1 bis 17, wobei die Gummizusammensetzung ferner eine Harzkomponente mit einem Erweichungspunkt von 90 °C oder weniger umfasst.

19. Reifen nach einem der Ansprüche 1 bis 18, wobei der Reifen ein Rennreifen ist.

**Revendications**

1. Pneu comprenant une partie de bande de roulement,

   dans lequel la partie de bande de roulement est composée d'une composition de caoutchouc comprenant un composant de caoutchouc et une charge,
   dans lequel la composition de caoutchouc comprend plus de 100 parties en masse de la charge sur la base de 100 parties en masse du composant de caoutchouc,
   dans lequel une température de transition vitreuse $Tg_2$ °C de la composition de caoutchouc après extraction à l'acétone, telle que déterminée selon la description, est inférieure à -45, et
   dans lequel, lorsque un rapport de terre dans une surface de contact de la partie de bande de roulement est défini comme R(%), tel que déterminé selon la description, $Tg_2$ et R satisfont à l'inégalité (1) suivante.

$$(10 - 1{,}25\ Tg_2)/R > 1{,}00 \cdots (1)$$

2. Pneu selon la revendication 1, dans lequel la température de transition vitreuse $Tg_1$°C de la composition de caoutchouc avant l'extraction à l'acétone est inférieure ou égale à -15.

3. Pneu selon la revendication 1 ou 2, dans lequel une quantité S% en masse de soufre dans le composant de caoutchouc de la composition de caoutchouc est inférieure ou égale à 0,95.

4. Pneu selon l'une quelconque des revendications 1 à 3, dans lequel la composition de caoutchouc comprend en outre un caoutchouc liquide.

5. Pneu selon l'une quelconque des revendications 1 à 4, dans lequel la $Tg_2$°C est inférieure ou égale à -60.

6. Pneu selon l'une quelconque des revendications 1 à 5, dans lequel la composition de caoutchouc comprend plus de 5 parties en masse et moins de 150 parties en masse de noir de carbone sur la base de 100 parties en masse du composant caoutchouc.

7. Pneu selon l'une quelconque des revendications 1 à 6, dans lequel la composition de caoutchouc comprend de la silice ayant une taille moyenne de particules primaires de 18 nm ou moins.

8. Pneu selon l'une quelconque des revendications 1 à 7, dans lequel le côté droit de l'inégalité (1) est 1,10.

9. Pneu selon l'une quelconque des revendications 1 à 8, dans lequel la dureté du caoutchouc de la composition de caoutchouc est supérieure à 62 et inférieure à 75.

10. Pneu selon l'une quelconque des revendications 1 à 9, dans lequel un $\tan\delta$ à 0 °C ($\tan\delta$ à 0 °C) de la composition de caoutchouc, tel que déterminé selon la description, est supérieur à 0,40.

11. Pneu selon l'une quelconque des revendications 1 à 10, dans lequel un $\tan\delta$ à 30 °C ($\tan\delta$ à 30 °C) de la composition de caoutchouc est supérieur à 0,20.

12. Pneu selon l'une quelconque des revendications 1 à 11, dans lequel le module d'élasticité complexe à 30 °C ($E^*_{30}$) de la composition de caoutchouc, tel que déterminé selon la description, est inférieur à 30 MPa.

13. Pneu selon l'une quelconque des revendications 1 à 12, dans lequel le produit d'un $\tan\delta$ à 100 °C ($\tan\delta$ à 100 °C) et de R de la composition de caoutchouc est supérieur ou égal à 5,0.

14. Pneu selon l'une quelconque des revendications 1 à 13, dans lequel la composition de caoutchouc comprend de la silice ayant une taille moyenne de particules primaires de 16 nm ou moins.

15. Pneu selon l'une quelconque des revendications 1 à 14, dans lequel la composition de caoutchouc comprend plus de 5 parties en masse d'un agent plastifiant à base d'ester sur la base de 100 parties en masse du composant de caoutchouc.

16. Pneu selon l'une quelconque des revendications 1 à 15, dans lequel la composition de caoutchouc comprend plus de 1 partie en masse d'un agent de réticulation organique sur la base de 100 parties en masse du composant de caoutchouc.

17. Pneu selon l'une quelconque des revendications 1 à 16, dans lequel un produit de $Tg_2$ de la composition de caoutchouc et S est inférieur ou égal à -50.

18. Pneu selon l'une quelconque des revendications 1 à 17, dans lequel la composition de caoutchouc comprend en outre un composant résine ayant un point de ramollissement de 90 °C ou moins.

19. Pneu selon l'une quelconque des revendications 1 à 18, dans lequel le pneu est un pneu de course.

# FIG. 1

# FIG. 2

**EP 4 289 633 B1**

## REFERENCES CITED IN THE DESCRIPTION

**Patent documents cited in the description**

- JP 2012158662 A